(19) **Europäisches Patentamt European Patent Office Office européen des brevets**

(11) **EP 3 868 239 B1**

(12) **EUROPEAN PATENT SPECIFICATION**

(45) Date of publication and mention
of the grant of the patent:
**02.10.2024 Bulletin 2024/40**

(21) Application number: **21168886.6**

(22) Date of filing: **14.03.2017**

(51) International Patent Classification (IPC):
*A43B 1/10* (2006.01)    *A43B 13/12* (2006.01)
*C08J 9/00* (2006.01)    *A43B 5/06* (2022.01)
*A43B 7/14* (2022.01)    *A43B 13/04* (2006.01)
*A43B 13/14* (2006.01)    *A43B 13/16* (2006.01)
*A43B 13/18* (2006.01)    *A43B 13/22* (2006.01)
*B29D 35/12* (2010.01)    *C08J 9/06* (2006.01)
*C08L 23/14* (2006.01)    *C08L 23/08* (2006.01)

(52) Cooperative Patent Classification (CPC):
(C-Sets available)
**C08L 23/0853; A43B 5/06; A43B 7/14;
A43B 7/144; A43B 13/04; A43B 13/125;
A43B 13/141; A43B 13/16; A43B 13/188;
A43B 13/223; B29D 35/122; C08J 9/0061;
C08J 9/06; C08L 23/14;** C08J 2201/026;    (Cont.)

(54) **FOAM COMPOSITIONS AND USES THEREOF**

SCHAUMZUSAMMENSETZUNGEN UND VERWENDUNGEN DAVON

COMPOSITIONS EN MOUSSE ET LEURS UTILISATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2016 US 201662308694 P
29.04.2016 US 201662329625 P
05.12.2016 US 201662429912 P**

(43) Date of publication of application:
**25.08.2021 Bulletin 2021/34**

(62) Document number(s) of the earlier application(s) in
accordance with Art. 76 EPC:
**17712687.7 / 3 429 385**

(73) Proprietor: **NIKE Innovate C.V.
Beaverton, OR 97005 (US)**

(72) Inventor: **BAGHDADI, Hossein, A
Beaverton, OR Oregon 97005 (US)**

(74) Representative: **Abel & Imray LLP
Westpoint Building
James Street West
Bath BA1 2DA (GB)**

(56) References cited:
**CN-A- 104 927 182      JP-B1- 5 719 980
US-A1- 2006 154 998**

(52) Cooperative Patent Classification (CPC): (Cont.)
C08J 2207/00; C08J 2323/08; C08J 2331/04;
C08J 2353/00; C08J 2353/02; C08J 2423/10;
C08J 2453/00; C08J 2453/02

C-Sets
**C08L 23/0853, C08L 23/0815, C08L 53/00,
C08L 53/025;
C08L 23/14, C08L 23/14**

**Description**

**CROSS-REFERENCE TO RELATED APPLICATIONS**

This application claims priority to, and the benefit of, U.S. utility application entitled "FOAM COMPOSITIONS AND USES THEREOF" having serial no. 15/458,564 filed March 14, 2017, U.S. utility application entitled "FOAM COMPOSITIONS AND USES THEREOF" having serial no. 15/458,581 filed March 14, 2017, U.S. provisional application entitled "FOAM COMPOSITIONS AND USES THEREOF" having serial no. 62/308,694 filed March 15, 2016, U.S. provisional application entitled "FOAM COMPOSITIONS AND USES THEREOF" having serial no. 62/329,625 filed April 29, 2016, and U.S. provisional application entitled "FOAM COMPOSITIONS AND USES THEREOF" having serial no. 62/429,912 filed December 5, 2016.

**TECHNICAL FIELD**

The present disclosure generally relates to materials, and in particular to materials for the footwear and related industries and uses thereof.

**BACKGROUND**

Footwear design involves a variety of factors from the aesthetic aspects, to the comfort and feel, to the performance and durability. While footwear design and fashion may be rapidly changing, the demand for increasing performance in the athletic footwear market is unchanging. To balance these demands, footwear designers employ a variety of materials and designs for the various components that make up an article of footwear. US 2006/154998 A1 discloses a resin composition for a foamed product comprising an ethylene/alpha-olefin copolymer, a styrene block copolymer and an ethylene/polar monomer copolymer. JP 5719980 B discloses a crosslinked foam for shoe soles, the foam being characterized by pulse NMR. CN 104927182 A discloses a tea-scented shoe midsole material incorporating polyolefin elastomers, EVA and thermoplastic rubber.

**BRIEF DESCRIPTION OF THE DRAWINGS**

Further aspects of the present disclosure will be readily appreciated upon review of the detailed description, described below, when taken in conjunction with the accompanying drawings.

**FIG. 1** is an elevation view of an article of footwear with a sole component according to an aspect of the invention.

**FIG. 2** is an exploded view of the sole component of the article of footwear of **FIG. 1.**

**FIG. 3** is a plan view of the bottom of the sole component of the article of footwear of **FIG. 1.**

**FIG. 4** is a bottom view of an insert for use in a sole component of an article of footwear.

**FIG. 5** is a top view of the insert of **FIG. 4** inserted in a first portion to form a sole component.

**DETAILED DESCRIPTION**

New designs and materials for the footwear industry are needed. In particular, there remains a need for improved foam compositions, for example that can be used in the footwear industry to provide improved cushion and energy return when used in a midsole or other component for an article of footwear.

Thus, provided herein is a pre-foam composition as defined in claim 1, a foamed composition as defined in claim 11, a compression molded foam as defined in claim 13, a sole component as defined in claim 14, and an article of footwear as defined in claim 15. Thus, in various aspects, compositions are provided that can be foamed, i.e. can be used to produce a foam composition. For clarity, compositions that have not been foamed will, in some instances be referred to as "pre-foam" compositions. Foam compositions are also provided, e.g. compositions that have been prepared by foaming a "pre-foam" composition described herein. Articles of footwear, such as athletic shoes, and components thereof are also provided including one or more of the foam compositions. In particular, various aspects of the present disclosure describe sole components for an article of footwear having exceptionally high energy return. The sole components having exceptionally high energy return can be made from foaming a pre-foam composition described herein.

**Articles of Footwear**

Provided herein is a sole component as defined in claim 14 and an article of footwear as defined in claim 15.

In various aspects, articles of footwear are provided. In particular, articles of footwear are provided including one or more components made entirely or partially from a foam mentioned above and described in more detail below. The foams and components made therefrom can have a range of desirable properties for footwear, including softness, durability, and an exceptionally high energy return. The articles of footwear can, in principal, include any article of footwear. In various aspects, the article of footwear can include a shoe, a boot, or a sandal.

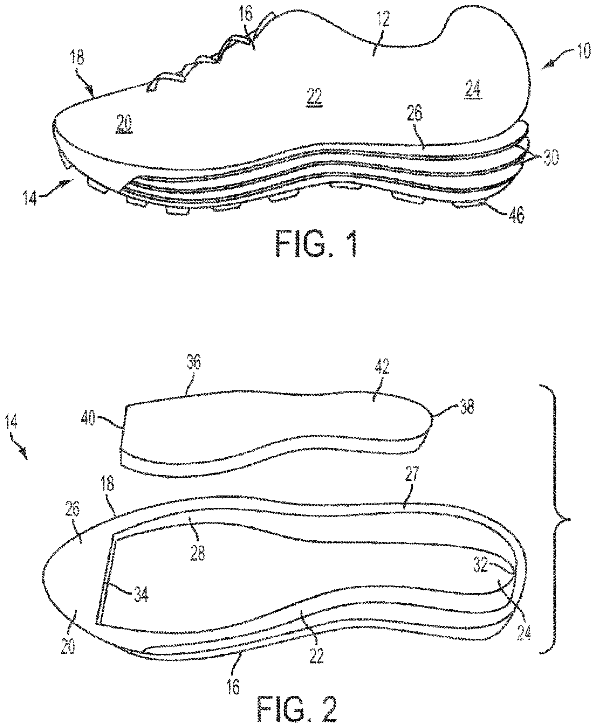

The most common articles of footwear are shoes. Shoes can include athletic shoes such as baseball shoes, basketball shoes, soccer shoes, football shoes, running shoes, cross-trainer shoes, cheerleading shoes, golf shoes, and the like. The shoes can, in some aspects, be cleated. An exemplary article of footwear **10** is shown in **FIG. 1.** While an athletic shoe is exemplified in **FIG. 1,** it will be readily understood that some of the terminology employed will also apply to other articles of footwear or to other styles of shoe. Footwear **10** includes an upper **12** and a sole component **14** secured to upper **12**. Sole component **14** can be be secured to upper **12** by adhesive or any other suitable means. As used herein, the sole component **14** can be a monolithic component formed entirely of the foam material as described herein, or a multi-component assembly formed of a plurality of monolithic components, where at least one of the monolithic components is formed entirely of the foam material as described herein. Footwear **10** has a medial, or inner, side **16** and a lateral, or outer, side **18**.

The upper, in some aspects, is unformed until the point that it is attached to the sole component. In some aspects, the upper is a lasted upper. A "lasted upper," as used herein, refers to an upper that is formed into the shoe shape prior to attachment to the sole by one or more mechanical means. The lasted upper can include a heel counter formed to shape the heel of the upper. The lasted upper can include a strobel sock or a strobel board attached to the upper, typically via a strobel stitch.

Sole component **14,** which is generally disposed between the foot of the wearer and the ground, provides attenuation of ground reaction forces (i.e., imparting cushioning), traction, and may control foot motions, such as pronation. As with conventional articles of footwear, sole component **14** can include an insole (not shown) located within upper **12.**. In some aspects, the sole component is an insole or sockliner or is a multi-component assembly including an insole or sockliner, can further include an insole or sockliner located within the upper, where the insole or sockliner is formed entirely or partially of a foam material described herein. Articles of footwear described herein can include an insole or sockliner formed entirely or partially of a foam material described herein.

The most common components of shoes and other footwear can be classified into one of three types of components: upper components, lower components, and grindery components. Upper components refer collectively to all of the components that are stitched or otherwise joined together to form the upper. The materials in the upper generally contribute to characteristics such as breathability, conformability, weight, and suppleness or softness. The lower components refer collectively to all of the components that collectively form the lower. The lower can include, for example, the outsole and midsole. The choice of outsole materials and design will contribute, for instance, to the durability, traction, as well as to the pressure distribution during use. The midsole materials and design contribute to factors such as the cushioning and support. Grindery components include all of the additional components that can be attached to the upper, lower, or both. Grindery components can include, for example, eyelets, toe puffs, shanks, nails, laces, velcro, catches, backers, linings, padding, heel backings, heel foxings, toe caps, etc.

For purposes of general reference, footwear **10** can be divided into three general portions: a forefoot portion **20,** a midfoot portion **22,** and a heel portion **24**. Portions **20, 22,** and **24** are not intended to demarcate precise areas of footwear **10**. Rather, portions **20, 22,** and **24** are intended to represent general areas of footwear **10** that provide a frame of reference during the following discussion.

Unless otherwise stated, or otherwise clear from the context below, directional terms used herein, such as rearwardly, forwardly, top, bottom, inwardly, downwardly, upwardly, etc., refer to directions relative to footwear **10** itself. Footwear is shown in **FIG. 1** to be disposed substantially horizontally, as it would be positioned on a horizontal surface when worn by a wearer. However, it is to be appreciated that footwear **10** need not be limited to such an orientation. Thus, in **FIG. 1,** rearwardly is toward heel portion **24,** that is, to the right as seen in **FIG. 1.** Naturally, forwardly is toward forefoot portion **20,** that is, to the left as seen in **FIG. 1,** and downwardly is toward the bottom of the page as seen in **FIG. 1.** Top refers to elements toward the top of the page as seen in **FIG. 1,** while bottom refers to elements toward the bottom of the page as seen in **FIG. 1.** Inwardly is toward the center of footwear **10,** and outwardly is toward the outer peripheral edge of footwear **10**.

Unless otherwise stated, or otherwise clear from the context below, directional terms used herein, such as rearwardly, forwardly, top, bottom, inwardly, downwardly, upwardly, etc., refer to directions relative to footwear **10** itself. Footwear is shown in **FIG. 1** to be disposed substantially horizontally, as it would be positioned on a horizontal surface when worn by a wearer. However, it is to be appreciated that footwear **10** need not be limited to such an orientation. Thus, in **FIG. 1,** rearwardly is toward heel portion **24,** that is, to the right as seen in **FIG. 1.** Naturally, forwardly is toward forefoot portion **20,** that is, to the left as seen in **FIG. 1,** and downwardly is toward the bottom of the page as seen in **FIG. 1.** Top refers to elements toward the top of the page as seen in **FIG. 1,** while bottom refers to elements toward the bottom of the page as seen in **FIG. 1.** Inwardly is toward the center of footwear **10,** and outwardly is toward the outer peripheral edge of footwear **10.**

As can be seen in **FIG. 2,** sole component **14** consists of a first portion **26** having an upper surface **27** with a recess **28** formed therein. Upper surface **27** is secured to upper **12** with adhesive or other suitable fastening means. A plurality of substantially horizontal ribs **30** is formed on the exterior of first portion **26.** In certain aspects, ribs **30** extend from a central portion of forefoot portion **20** on medial side **16** rearwardly along first portion **26,** around heel portion **24** and forwardly on lateral side **18** of first portion **26** to a central portion of forefoot portion **20.**

First portion **26** provides the external traction surface of sole component **14.** In certain aspects it is to be appreciated that a separate outsole component could be secured to the lower surface of first portion **26.**

Recess **28** extends from heel portion **24** to forefoot portion **20.** In certain aspects, the rear surface **32** of recess **28** is curved to substantially follow the contour of the rear of heel portion **24** and the front surface **34** of recess **28** extends transversely across first portion **26.**

An insert **36** is received in recess **28.** insert **36** has a curved rear surface **38** to mate with curved rear surface **32** of recess **28** and a transverse front surface **40** to mate with transverse front surface **34** of recess **28.** An upper surface **42** of insert **36** is in contact with and secured to upper **12** with adhesive or other suitable fastening means.

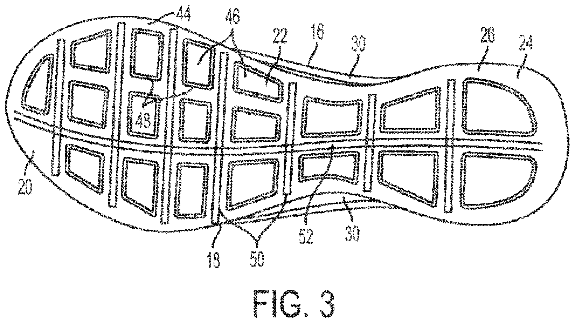

As seen best in **FIG. 3,** a ground engaging lower surface **44** of first portion **26** includes a plurality of projections **46.** Each projection **46** is surrounded by a groove **48.** A plurality of transverse slots **50** are formed in lower surface **44,** extending between adjacent projections **46.** A longitudinal slot **52** extends along lower surface **44** from heel portion **26** to forefoot portion **20.**

As illustrated in **FIG. 2,** insert **36** can provide cushioning or resiliency in the sole component. First portion **26** can provide structure and support for insert **36.** In such aspects, first portion **26** can be formed of a material of higher density and/or hardness as compared to insert **36** such as, for example, non-foam materials including rubber and thermoplastic polyurethane, as well as foam materials. In certain aspects, insert **36** can be formed of a foam material as disclosed herein.

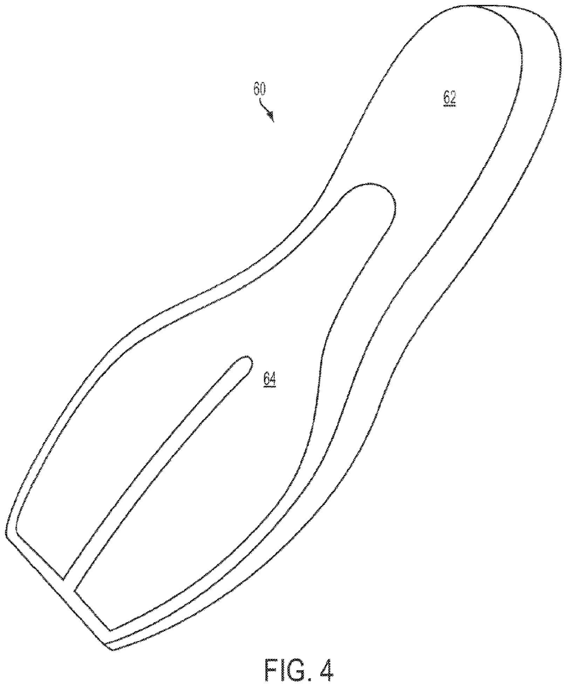

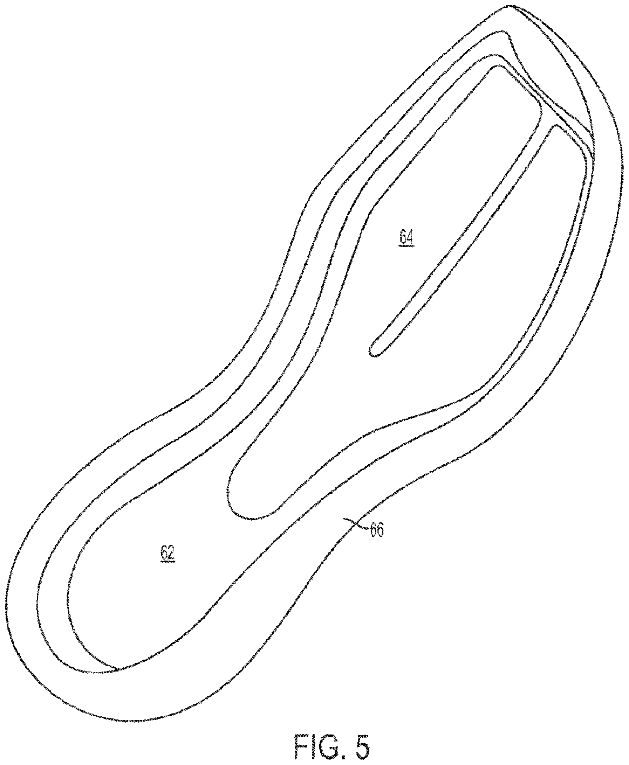

**FIGS. 4** and **5** show bottom and top views of an insert **60** which can be used in a sole component as described herein. Insert **60** is similar to insert **36,** but as illustrated in **FIGS. 4** and **5,** insert **60** is formed of two types of materials **62** and **64,** where at least one of the materials is a foam as disclosed herein. **FiG. 4** shows a bottom view of insert **60,** while **FIG. 5** shows a top view of insert **60** formed of two types of materials **62** and **64,** with the insert placed inside a first portion **66** to form a sole component **14.** inserts with more than two types of materials, at least one of which is a foam as disclosed herein, can also be used. In the example illustrated in **FIGS. 4** and **5,** a portion of a first material **62** can be used in the heel region of the insert, and a portion of a second material **64** can be used in the toe region of the insert. A higher density material can be used to support the heel region, while a lower density material can be used to support the toe region. For example, the density of the first material can be at least 0.02 g/cm$^3$ greater than the density of the second material. The shape of the portions of the two materials **62** and **64** of the insert can be any suitable shape. For example, the heel region can be in the shape of a wedge. Inserts formed of two types of materials can be useful in running shoes, as well as in basketball shoes.

While the compositions and foams described herein can be used for making any of a variety of components for an article of footwear, in particular aspects the components include a midsole, an outsole, an insole, a tongue padding, a collar padding, and a combination thereof. In some aspects, the component is a sole component, such as a sole component **14** depicted in **FIGS. 1-5,** that includes a foam described herein. In some aspects, the component is an insert such as insert **36** or insert **60** depicted in **FIGS. 4-5** that includes a foam described herein. The sole components and inserts for sole components can be made partially or entirely of a foam described herein. Any portion of a sole component or an insert for a sole component can be made of a foam described herein. For example, first portion **26** of the sole component (optionally including the ground engaging lower surface **44,** such as the plurality of projections **46** and/or the groove **48** surrounding the projections), the entire insert **36,** portions **62** or **64** of insert **60,** a separate outsole component, or any combination thereof, can include a foam as described herein. The sole components and inserts can be made by foaming a composition provided herein, for example by injection molding or by injection molding followed by compression molding as described herein. The foams and components can demonstrate improved physical properties including one or more of an enhanced energy return, and enhanced split tear, a decreased specific density, or a combination thereof.

Split tear is an important physical property for a foam for a component of an article of footwear or athletic equipment. In some aspects, the foam or component can have a split tear value of 1.0 kg/cm to 4.5 kg/cm, 1.6 kg/cm to 4.0 kg/cm, 2.0 kg/cm to 4.0 kg/cm, 2.0 kg/cm to 3.5 kg/cm, or 2.5 kg/cm to 3.5 kg/cm. The split tear can be measured as described in the examples below. In some aspects, the foam or component is compression molded, and the compression molded foam or component can have a split tear of 0.08 kg/cm to 4.0 kg/cm, 0.9 kg/cm to 3.0 kg/cm, 1.0 to 2.0 kg/cm, 1.0 kg/cm to 1.5 kg/cm, or 2 kg/cm. In some aspects, the foam or component is injection molded, and the foam or component can have a split tear of 0.07 kg/cm to 2.0 kg/cm, or 0.8 kg/cm to 1.5 kg/cm, or 0.9 to 1.2 kg/cm, 1.5 kg/cm to 2.2 kg/cm.

The energy return, a measure of the percentage of energy the foam or component returns when compressed, is an important physical property. This is especially true for running and other athletic shoes. In some aspects, the foams and components provided herein have an energy return of 60% to 90%, 60% to 85%, 65% to 85%, or 70% to 85%. In some aspects, the foam or component is compression molded and can have an energy return of 60% to 95% (e.g., 60% to 85%; 65% to 80%; 65% to 75%; 70% to 80%; or 75% to 80%; 75% to 85%; 80% to 95%; or 85% to 95%). The energy return can be measured as described in the examples below.

The foams and components can be lightweight. In some aspects, the foams and components can have a specific density of .05 to 0.25, 0.05 to 0.2, 0.05 to 0.15, 0.08 to 0.15, 0.08 to 0.20, 0.08 to 0.25, or 0.1 to 0.15. In some aspects the foam or component is compression molded and can have a specific density of 0.15 to 0.3, 0.2 to 0.3, or 0.15 to 0.25.

In some examples, the process for making the foams and components of the various examples described herein further includes compression molding the foam to give a compression molded foam or a compression molded component. In some aspects, compression molding foamed preforms formed from the foam compositions of the present disclosure can produce compression molded foam components having physical properties which make these components particularly advantageous for use in articles of footwear and athletic equipment. For example, the physical properties of these compression molded foam components make them particularly useful for use as cushioning elements, such as midsoles.

In some aspects, the resiliency and/or energy return of the compression molded foam or compression molded component can be significantly greater than the resiliency and/or energy return of the otherwise same foam preform used to make the compression molded foam component. While compression molded foam components formed from preforms foamed using other blowing methods sometimes have greater resiliency and/or energy return than their preforms, an even greater increase in resiliency and/or energy return can be achieved when compression molding foam preforms that were foamed using an impregnation process utilizing a physical blowing agent, as described herein. The resiliency and/or energy return of the compression molded foam component can be at least at least 6 percentage points, or at least 7 percentage points, or at least 8 percentage points, or at least 9 percentage points, or at least 10 percentage points, or at least 12 percentage points greater than the resiliency and/or energy return of the foam preform used to make the compression molded foam component. In particular examples, the resiliency and/or energy return of the compression molded foam component is at least 9 percentage points greater than the resiliency and/or energy return of the foam preform used for make the compression molded foam component.

This greater increase in the resiliency and/or energy return of the compression molded foam component can thus result in components having higher resiliency and/or energy return than would be possible using foam preforms made using other blowing methods. Using the blowing methods described herein, it has been found that it is possible to produce compression molded foam components having higher than usual resiliencies while using materials and methods which are cost-effective for use in consumer goods such as articles of footwear and athletic equipment. The resiliency and/or energy return of the compression molded foam component can be greater than 45%, or greater than 50%, or greater than 55%, or greater than 60%, or greater than 65%. For example, the resiliency and/or energy return of the compression molded foam component can be from 45% to 95%, or from 50% to 90%, or from 55% to 90%, or from 60% to 80%, or from 50% to 85%, or from 55% to 75%, or from 60% to 75%. Compression molded foam components having resiliencies greater than 45%, or 50%, or 55%, or 60%, or 65%, can be particularly advantageous for use in articles of footwear. Additionally or in combination, the resiliency and/or energy return of the foam preform can be less than 75%, or less than 70%, or less than 65%, or less than 60%. For example, the resiliency and/or energy return of the foam preform can be from 40% to 80%, or from 55% to 75%, or from 50% to 70% or from 65% to 80%.

In particular examples, the resiliency and/or energy return of the compression molded foam component can be at least at least 6 percentage points, or at least 7 percentage points, or at least 8 percentage points, or at least 9 percentage points, or at least 10 percentage points, or at least 12 percentage points greater than the resiliency and/or energy return of the foam preform used to make the compression molded foam component when the compression molded foam component has a resiliency and/or energy return greater than 45%, or greater than 50%, or greater than 55%, or greater than 60%, or greater than 65%.

Several methods of measuring resiliency and/or energy return of foams (e.g., foam preforms and foam components) exist in the art. One method of measuring resiliency of foams is based on ASTM D 2632-92, which is a test for solid rubber materials. For use with foams, the test sample is prepared as described in ASTM D2632-92, but uses a sample of foam in place of the sample of solid rubber. This test uses a plunger which is dropped from a height onto a test sample while being guided by a vertical rod. The drop height is divided into 100 equal parts, and the height to which the plunger rebounds is measured using this 100 part scale, to determine the resiliency of the sample. Alternative methods which use a ball of standard weight dropped onto a sample, and which measure the rebound height of the ball to determine the resiliency of the sample can also be used.

The specific gravity of a foam is also an important physical property to consider when using a foam for a component of an article of footwear or athletic equipment. The foams and components of the present disclosure can have a specific gravity of from 0.02 g/cm$^3$ to 0.22 g/cm$^3$, or of from 0.03 g/cm$^3$ to 0.12 g/cm$^3$, or of from 0.04 g/cm$^3$ to 0.10 g/cm$^3$, or from 0.11 g/cm$^3$ to 0.12 g/cm$^3$, or from 0.10 g/cm$^3$ to 0.12 g/cm$^3$, from 0.15 g/cm$^3$ to 0.2 g/cm$^3$; 0.15 g/cm$^3$ to 0.30 g/cm$^3$. Alternatively or in addition, the foam preform can have a specific gravity of from 0.01 g/cm$^3$ to 0.10 g/cm$^3$, or of from 0.02 g/cm$^3$ to 0.08 g/cm$^3$, or of from 0.03 g/cm$^3$ to 0.06 g/cm$^3$; 0.08 g/cm$^3$ to 0.15 g/cm$^3$; or from 0.10 g/cm$^3$ to 0.12 g/cm$^3$. For example, the specific gravity of the compression molded foam component can be from or from 0.15 g/cm$^3$ to 0.2 g/cm$^3$, and the specific gravity of the foam preform can be from 0.10 g/cm$^3$ to 0.12 g/cm$^3$. The foam or component can be compression molded.

In particular examples, the resiliency and/or energy return of the compression molded foam component can be at least at least 6 percentage points, or at least 7 percentage points, or at least 8 percentage points, or at least 9 percentage points, or at least 10 percentage points, or at least 12 percentage points greater than the resiliency and/or energy return of the foam preform used to make the compression molded foam component when the compression molded foam component has a resiliency and/or energy return greater than 45%, or greater than 50%, or greater than 55%, or greater than 60%, or greater than 65%, and the compression molded foam can have a specific gravity of from 0.02 g/cm$^3$ to 0.15 g/cm$^3$, or of from 0.03 g/cm$^3$ to 0.12 g/cm$^3$, or of from 0.04 g/cm$^3$ to 0.10 g/cm$^3$ or from 0.11 g/cm$^3$ to 0.12 g/cm$^3$, from 0.15 g/cm$^3$ to 0.2 g/cm$^3$; or 0.15 g/cm$^3$ to 0.30 g/cm$^3$.

The specific gravity of the foam or component can be determined by testing at least 3 representative samples taken from a foam preform or compression molded foam component (e.g., a 2 inch × 2 inch sample or a 1 inch × 1 inch sample), or at least 3 entire foam preforms or compression molded foam components. Using a balance with appropriate accuracy for the weight of the sample, the weight of each sample is determined both in air and when the sample is completely submerged in distilled water at a temperature of 22°C ± 2°C, after removing any air bubbles adhered to the surface of the foam sample weighing. The specific gravity (S.G.) is then calculated by taking the weight of the sample in water and subtracting that from the weight of the sample in air, and this value is then divided into the weight of the sample in air, where all the weights are weights in grams.

Compression set of a foam is another important physical property for a foam used as a component of an article of footwear or athletic equipment. In accordance with the present disclosure, the compression molded foam or compression molded component can have a compression set of from 40% to 100%. For example, the compression set can be from 45% to 90%, or from 40% to 80%, or from 50% to 75%.

Compression set can be measured by preparing a sample of a standard thickness (e.g., 10 mm) of a foam preform. Components having a thickness less than the standard can be stacked to make a sample having the standard thickness. The sample is loaded into a metal compression plate and compressed to a height of 50% of the original thickness (e.g., 5 mm). The sample is placed in a 50°C oven on its side for 6 hours. At the end of the 6 hours, the sample is removed from the oven and from the metal compression plate, and allowed to cool for 30 minutes. Once cooled, the thickness of the sample is measured. The percent compression set (C.S.) is calculated by (a) subtracting the final sample thickness from the original sample thickness, and (b) subtracting the 50% compressed thickness from the original sample thickness, (c) dividing (a) by (b), and (d) multiplying the result by 100 to obtain the percent compression set (where all thicknesses are measured in millimeters).

Durometer is another important physical property of a foam or component that is to be used in an article of footwear or athletic equipment. In accordance with the present disclosure, the compression molded foam or component can have a durometer of at least 20 Asker C, or at least 30 Asker C, or at least 40 Asker C, or at least 50 Asker C. For example, the durometer of the compression molded foam or compression molded component can have a durometer of from 20 Asker C to 70 Asker C, or of from 20 Asker C to 40 Asker C, or from 30 Asker C to 35 Asker C, or of from 25 Asker C to 65 Asker C, or of from 30 Asker C to 50 Asker C, or of from 40 Asker C to 70 Asker C, or of from 35 Asker C to 55 Asker C, or from 50 Asker C to 65 Asker C. The foam preform can have a durometer of less than 40 Asker C, or less than 30 Asker C, or less than 20 Asker C. For example, the durometer of the foam preform can be from 15 Asker C to 50 Asker C, or from 20 Asker C to 50 Asker C, or from 20 Asker C to 40 Asker C, or from 20 Asker C to 30 Asker C. The durometer can be measured on a flat area of foam, e.g., at least 6 mm thick using an Asker C durometer.

In particular examples, the resiliency and/or energy return of the compression molded foam component can be at least at least 6 percentage points, or at least 7 percentage points, or at least 8 percentage points, or at least 9 percentage points, or at least 10 percentage points, or at least 12 percentage points greater than the resiliency and/or energy return of the foam preform used to make the compression molded foam component when the compression molded foam component has a resiliency and/or energy return greater than 45%, or greater than 50%, or greater than 55%, or greater than 60%, or greater than 65%, and the compression molded foam component can have a of at least 20 Asker C, or at least 30 Asker C, or at least 40 Asker C, or at least 50 Asker C. In addition, the compression molded foam can have a specific gravity of from 0.02 g/cm$^3$ to 0.15 g/cm$^3$, or of from 0.03 g/cm$^3$ to 0.12 g/cm$^3$, or of from 0.04 g/cm$^3$ to 0.10 g/cm$^3$, or from 0.11 g/cm$^3$ to 0.12 g/cm$^3$ from 0.15 g/cm$^3$ to 0.2 g/cm$^3$; or 0.15 g/cm$^3$ to 0.30 g/cm$^3$.

Split tear is another important physical property for a foam or a component used in an article of footwear or athletic equipment. In accordance with the present disclosure, the compression molded foam or component can have a split tear of from 0.08 kg/cm to 4.0 kg/cm, or of from 0.9 kg/cm to 3.0 kg/cm, or of from 1.0 to 2.0 kg/cm, or of from 1.0 kg/cm to 1.5 kg/cm, or of 2 kg/cm. Alternatively or in addition, the foam preform can have a split tear of from 0.07 kg/cm to 2.0 kg/cm, or of from 0.8 kg/cm to 1.5 kg/cm, or of from 0.9 to 1.2 kg/cm, or from 1.5 kg/cm to 2.2 kg/cm.

Split tear for foam preforms and compression molded foam components can be measured using ASTM D3574-95. Although this method is directed to bonded and molded urethane foams, it can be used on any foam material in accordance with the present disclosure. A sample of foam having a thickness of 10 mm $\pm$ 1 mm. If the foam preform or compression molded foam component has an outer skin, the outer skin should not be present on the test sample. A 3 cm long cut is placed in the center of one end of the specimen, and marked in five successive 2 cm portions along the edge of the sample. The sample is tested as described in ASTM D3574-95.

The tear strength of the compression molded foam component can range from 4 kg/cm to 10 kg/cm.

The tensile strength of the foam is another important physical characteristic. The foam or component can have a tensile strength of from 5 kg/cm$^2$ to 25 kg/cm$^2$, or of from 10 kg/cm$^2$ to 23 kg/cm$^2$, or of from 15 kg/cm$^2$ to 22 kg/cm$^2$. The tensile strength can be measured on a die cut sample of the foam in the shape of a dumbbell of a standard size such as a 2.5 cm in width by 11.5 cm in length, with a minimum thickness of 3 to 4 mm. The dumbbell follows the shape described in ASTM D412, die C. The sample is loaded symmetrically into and tested using a long travel extensometer such as the Instron 2603-080 which allows for a minimum of 1000% strain with a gauge length of 25 mm and a resolution of at least 0.1 mm. The tensile value at the failure point of the sample (the point during testing when the load value initially drops) is recorded. The foam or component can be compression molded.

Another physical property to consider when determining whether or not a foam is suitable for use as a component of an article of footwear or athletic equipment is its 300% elongation. The compression molded foam or component can have an elongation of at least 125 kg/cm$^2$, or at least 150 kg/cm$^2$.

Some examples described herein are directed to a foam article (e.g., articles used to make at least portions of footwear or athletic equipment) made by a process/method comprising: forming a pre-foam composition; forming a crosslinked pre-foam composition; and blowing the pre-foam composition, the crosslinked pre-foam composition, or blowing both the pre-foam composition and the crosslinked pre-foam composition, to give a foam article. In some examples, the cross-linking and the blowing can occur substantially simultaneously. In some examples, the process for forming foam articles further comprises injection molding the pre-foam composition, and the crosslinking occurs during the injection molding. In some examples, the crosslinked composition, or both the pre-foam composition and the crosslinked composition are blown in a mold. In some examples, the crosslinking occurs during the injection molding (e.g., the crosslinking occurs substantially in the mold).

In some examples, the foam articles of the various examples described herein can further comprise at least one ethylene vinyl acetate copolymer, as the term is defined herein. The component, such as the midsole, can have a variety of beneficial properties.

It has been found that, for many examples, the resiliency and/or energy return (also referred to as energy return) of the compression molded foam article can be significantly greater than the resiliency and/or energy return of the foam article used to make the compression molded foam article. While compression molded foam articles formed using other blowing methods sometimes have greater resiliency and/or energy return than the corresponding foam article, an even greater increase in resiliency and/or energy return can be achieved when compression molding foam articles that were foamed using an impregnation process utilizing a physical blowing agent, as described herein. The resiliency and/or energy return of the compression molded foam article can be at least at least 6 percentage points, or at least 7 percentage points, or at least 8 percentage points, or at least 9 percentage points, or at least 10 percentage points, or at least 12 percentage points greater than the resiliency and/or energy return of the foam article used to make the compression molded foam article. In particular examples, the resiliency and/or energy return of the compression molded foam article is at least 9 percentage points greater than the resiliency and/or energy return of the foam article used for make the compression molded foam article.

This greater increase in the resiliency and/or energy return of the compression molded foam article can thus result in components having higher resiliency and/or energy return than would be possible using foam articles made using other blowing methods. Using the blowing methods described herein, it has been found that it is possible to produce compression molded foam articles having higher than usual resiliencies while using materials and methods which are cost-effective for use in consumer goods such as articles of footwear and athletic equipment. The resiliency and/or energy return of the compression molded foam article can be greater than 45%, or greater than 50%, or greater than 55%, or greater than 60%, or greater than 65%. For example, the resiliency and/or energy return of the compression molded foam article can be from 45% to 95%, or from 50% to 90%, or from 55% to 90%, or from 60% to 80%, or from 50% to 85%, or from 55% to 75%, or from 60% to 75%. Compression molded foam articles having resiliencies greater than 45%, or 50%, or 55%, or 60%, or 65%, can be particularly advantageous for use in articles of footwear. Additionally or in combination, the resiliency and/or energy return of the foam article can be less than 75%, or less than 70%, or less than 65%, or less than 60%. For example, the resiliency and/or energy return of the foam article can be from 40% to 80%, or from 55% to 75%, or from 50% to 70% or from 65% to 80%.

In particular examples, the resiliency and/or energy return of the compression molded foam article can be at least at least 6 percentage points, or at least 7 percentage points, or at least 8 percentage points, or at least 9 percentage points, or at least 10 percentage points, or at least 12 percentage points greater than the resiliency and/or energy return of the foam article used to make the compression molded foam article when the compression molded foam article has a resiliency and/or energy return greater than 45%, or greater than 50%, or greater than 55%, or greater than 60%, or greater than 65%.

The specific gravity of a foam article is also an important physical property to consider when using a foam for a component of an article of footwear or athletic equipment. The compression molded foam articles of the present disclosure can have a specific gravity of from 0.02 $g/cm^3$ to 0.22 $g/cm^3$, or of from 0.03 $g/cm^3$ to 0.12 $g/cm^3$, or of from 0.04 $g/cm^3$ to 0.10 $g/cm^3$, or from 0.11 $g/cm^3$ to 0.12 $g/cm^3$, or from 0.10 $g/cm^3$ to 0.12 $g/cm^3$, from 0.15 $g/cm^3$ to 0.2 $g/cm^3$; 0.15 $g/cm^3$ to 0.30 $g/cm^3$. Alternatively or in addition, the foam article can have a specific gravity of from 0.01 $g/cm^3$ to 0.10 $g/cm^3$, or of from 0.02 $g/cm^3$ to 0.08 $g/cm^3$, or of from 0.03 $g/cm^3$ to 0.06 $g/cm^3$; 0.08 $g/cm^3$ to 0.15 $g/cm^3$; or from 0.10 $g/cm^3$ to 0.12 $g/cm^3$. For example, the specific gravity of the compression molded foam article can be from or from 0.15 $g/cm^3$ to 0.2 $g/cm^3$, and the specific gravity of the foam article can be from 0.10 $g/cm^3$ to 0.12 $g/cm^3$.

In particular examples, the resiliency and/or energy return of the compression molded foam article can be at least at least 6 percentage points, or at least 7 percentage points, or at least 8 percentage points, or at least 9 percentage points, or at least 10 percentage points, or at least 12 percentage points greater than the resiliency and/or energy return of the foam article used to make the compression molded foam article when the compression molded foam article has a resiliency and/or energy return greater than 45%, or greater than 50%, or greater than 55%, or greater than 60%, or greater than 65%, and the compression molded foam article can have a specific gravity of from 0.02 $g/cm^3$ to 0.15 $g/cm^3$, or of from 0.03 $g/cm^3$ to 0.12 $g/cm^3$, or of from 0.04 $g/cm^3$ to 0.10 $g/cm^3$, or from 0.11 $g/cm^3$ to 0.12 $g/cm^3$ from 0.15 $g/cm^3$ to 0.2 $g/cm^3$; or 0.15 $g/cm^3$ to 0.30 $g/cm^3$.

Compression set of a foam article is another important physical property for a foam used as a component of an article of footwear or athletic equipment. In accordance with the present disclosure, the compression molded foam article can have a compression set of from 40% to 100%. For example, the compression set can be from 45% to 90%, or from 40% to 80%, or from 50% to 75%.

Durometer is another important physical property of a foam article used as an article of footwear or athletic equipment. In accordance with the present disclosure, the compression molded foam article can have a durometer of at least 20 Asker C, or at least 30 Asker C, or at least 40 Asker C, or at least 50 Asker C. For example, the durometer of the compression molded foam article can have a durometer of from 20 Asker C to 70 Asker C, or of from 20 Asker C to 40 Asker C, or from 30 Asker C to 35 Asker C, or of from 25 Asker C to 65 Asker C, or of from 30 Asker C to 50 Asker C, or of from 40 Asker C to 70 Asker C, or of from 35 Asker C to 55 Asker C, or from 50 Asker C to 65 Asker C. The foam article can have a durometer of less than 40 Asker C, or less than 30 Asker C, or less than 20 Asker C. For example, the durometer of the foam preform can be from 15 Asker C to 50 Asker C, or from 20 Asker C to 50 Asker C, or from 20 Asker C to 40 Asker C, or from 20 Asker C to 30 Asker C. The durometer can be measured on a flat area of foam, e.g., at least 6 mm thick using an Asker C durometer.

In particular examples, the resiliency and/or energy return of the compression molded foam article can be at least at least 6 percentage points, or at least 7 percentage points, or at least 8 percentage points, or at least 9 percentage points, or at least 10 percentage points, or at least 12 percentage points greater than the resiliency and/or energy return of the foam article used to make the compression molded foam article when the compression molded foam article has a resiliency and/or energy return greater than 45%, or greater than 50%, or greater than 55%, or greater than 60%, or greater than 65%, and the compression molded foam article can have a of at least 20 Asker C, or at least 30 Asker C, or at least 40 Asker C, or at least 50 Asker C. In addition, the compression molded foam article can have a specific gravity of from 0.02 $g/cm^3$ to 0.15 $g/cm^3$, or of from 0.03 $g/cm^3$ to 0.12 $g/cm^3$, or of from 0.04 $g/cm^3$ to 0.10 $g/cm^3$, or from 0.11 $g/cm^3$ to 0.12 $g/cm^3$ from 0.15 $g/cm^3$ to 0.2 $g/cm^3$; or 0.15 $g/cm^3$ to 0.30 $g/cm^3$.

The tear strength of the compression molded foam or article can range from 4 kg/cm to 10 kg/cm. The tensile strength of the foam or article is another important physical characteristic. The compression molded foam article can have a tensile strength of from 5 $kg/cm^2$ to 25 $kg/cm^2$, or of from 10 $kg/cm^2$ to 23 $kg/cm^2$, or of from 15 $kg/cm^2$ to 22 $kg/cm^2$.

Another physical property to consider when determining whether or not a foam article is suitable for use as a component of an article of footwear or athletic equipment is its 300% elongation. The compression molded foam article can have an elongation of at least 125 $kg/cm^2$, or at least 150 $kg/cm^2$.

Various examples include methods of manufacturing an article of footwear or components for an article of footwear. In some examples, the methods of manufacturing an article of footwear include blowing a composition described herein to give a foam article; compression molding the foam article to make a compression molded component for an article of footwear. The component can be a midsole, and the method can include providing an upper and an outsole for an article of footwear; and combining the compression molded midsole, the upper, and the outsole to make an article of footwear. In some examples, the method of manufacturing the article of footwear includes combining a compression molded foam article, an upper, and an outsole to make an article of footwear.

In some aspects, the present disclosure is directed to a compression molded foam, and to a method of forming compression molded foam for, among other applications, articles of footwear or athletic equipment. In some examples, the method can be a process comprising providing (e.g., preparing) a foam preform and then compression molding the foam preform to form a compression molded foam.

The present inventors have recognized, among other things, that the compression molded foam of the various examples described herein has improved physical characteristics, such as, for example, improved resiliency and/or energy return.

In some examples, one step of the method comprises providing (e.g., preparing or obtaining) a pre-foam composition as disclosed herein. For example, the pre-foam composition can be prepared using any method known in the art, including using a suitable kneader, a suitable single-screw or a suitable twin-screw extruder. An extruder (e.g., single or twin screw) can be used to provide a pre-foam composition. The extruder can have a motor to turn a screw inside the extruder. Screw may be a single screw or twin screws made of individual elements of various sizes and pitches appropriate for mixing or kneading the specific materials used. In some examples, the extruder has a twin screw.

The various components that make up the pre-foam compositions of the various examples described herein (optionally comprising one or more additional components selected from an ethylene vinyl acetate copolymer; a blowing agent; a crosslinking agent, and any combination thereof) are added into the extruder through a port. In some examples, the pre-foam compositions of the various examples described herein can be at least partially crosslinked at a first crosslinking temperature in, e.g., section of extruder to form a crosslinked pre-foam composition (e.g., at least partially crosslinked pre-foam composition), which, in some examples, may be a thermoplastic crosslinked pre-foam composition. Various other components (e.g., pigments, fillers, and blowing agents) can be added via a port into the extruder and mixed or kneaded with the pre-foam compositions and/or the crosslinked pre-foam composition (e.g., at least partially crosslinked pre-foam composition).

The various components that make up the pre-foam compositions of the various examples described herein may be added as a melt or as appropriately-sized solid particles, for example chips or pellets, that are melted in section as they are mixed or kneaded with, e.g., the crosslinked pre-foam composition (e.g., at least partially crosslinked pre-foam composition).

The contents of the extruder or mixer may be heated to, achieve, among other things, crosslinking of the pre-foam compositions to give a crosslinked pre-foam composition (e.g., at least partially crosslinked pre-foam composition). In other examples, the heating may trigger foaming (i.e., blowing) (e.g., via triggering a chemical blowing agent), thereby converting the crosslinked pre-foam composition (e.g., at least partially crosslinked pre-foam composition) to a foam composition that is sufficiently thermoplastic to be extruded or injected into a mold from the extruder 10. Alternatively, the crosslinked pre-foam composition (e.g., at least partially crosslinked pre-foam composition) can be foamed in the extruder using a physical blowing agent. And, in some examples, a chemical blowing agent can also be present, such that, when there is heating, the heating can trigger the chemical blowing agent.

In some examples, the pre-foam compositions may be added as a melt at a temperature close to or at the crosslinking temperature such that crosslinking can occur, but at a temperature that is sufficiently below the temperature that would trigger blowing. The temperature of the extruder can then be increased to a temperature close to or at the triggering temperature of a chemical blowing agent, thereby giving a foam composition.

The extent to which the pre-foam compositions is crosslinked to give a crosslinked pre-foam composition (e.g., at least partially crosslinked pre-foam composition) can be controlled so that the crosslinked pre-foam composition (e.g., at least partially crosslinked pre-foam composition) remains thermoplastic and can be mixed with various other components (e.g., pigments, fillers, and blowing agents) if necessary. This can be accomplished in various ways, for instance by controlling the amount of time for crosslinking; by controlling the crosslinking temperature; by causing a temperature reduction at a desired point of crosslinking to stop or slow further crosslinking; or by a combination of these. For example, the amount of time for crosslinking can be controlled by controlling screw speed, by locating port 8 closer to or further from port 6, or by a combination of these.

In some examples, as the crosslinking density increases, the crosslinked pre-foam composition (e.g., at least partially crosslinked pre-foam composition) can form phase separated domains.

A crosslinked pre-foam composition (e.g., at least partially crosslinked pre-foam composition) or a foam composition, each of which is sufficiently thermoplastic to be extruded or injected into a mold from the extruder, is extruded at an end of the extruded opposite the motor. In some examples, a vacuum port may be used to remove volatiles, for example water, volatile organic liquids that may have been introduced as solvents with some materials, crosslinking reaction by-products or blowing agent by-products. The extrudate may be shaped by being extruded through a die (not shown). For example, the extrudate (e.g., crosslinked pre-foam composition or foam composition) may be extruded in the form of strands that are then pelletized, in the form of a tube, or in the form of a sheet. The pelletization can be conducted using a cooled die. Additionally or alternatively, the pelletization can be performed under water, thus cooling the resulting pellets as they exited the pelletization die.

In some examples, the foam preforms of the various examples described herein are obtained by blowing the pre-foam composition, the crosslinked composition, or both the pre-foam composition and the crosslinked composition by 150% to 240% (e.g., from 150% to 220 %; 150% to 200%, 175% to 225%, 180% to 230% or 160% to 240%) in at least one dimension (e.g., the vertical dimension) using a blowing agent.

In some examples, the foam preforms of the various examples described herein are made using a process that involves impregnating a pre-foam composition, a crosslinked pre-foam composition or combinations thereof (e.g., at or above a softening temperature of the pre-foam composition, crosslinked pre-foam composition or combinations thereof) with a physical blowing agent at a first concentration or first pressure.

As used herein, the term "impregnating" generally means dissolving or suspending a physical blowing agent in a pre-foam composition, a crosslinked pre-foam composition or combinations thereof. The impregnated pre-foam composition, crosslinked pre-foam composition or combinations thereof can then be foamed, or can be cooled (when applicable) and re-softened (when applicable) for blowing at a later time.

In some instances, the impregnated pre-foam composition, crosslinked pre-foam composition or combinations thereof is foamed by reducing the concentration or pressure of the physical blowing agent. The reduction in concentration of the physical blowing agent can release additional amounts (e.g., to create a secondary expansion of an originally-formed microcell in the pre-foam composition, crosslinked pre-foam composition or combinations thereof) of the impregnated physical blowing agent from the pre-foam composition, crosslinked pre-foam composition or combinations thereof, to further blow the pre-foam composition, crosslinked pre-foam composition or combinations thereof, forming a foam composition (e.g., a foam composition having a closed-cell structure).

In addition to injection molding, the pre-foam compositions of the present disclosure can be foamed and optionally molded using various processes known in the art. For example, the pre-foam compositions can be used to form slab foam, particulate (e.g., bead) foams of various shapes and sizes, etc. These various forms of foam can then be used in different ways. For example, slab foam can be used directly as a finished foam article, can be shaped (e.g., cut or trimmed) to form a finished foam article, or can be compression molded to form a finished foam article. The foams can be subjected to annealing processes as part of forming the finished foam article. Pellets of the pre-foam compositions can be used to form individual particulate foams, or can be foamed and molded to form unitary molded foam articles composed of individual portions of foam affixed to each other.

The foam compositions of the various examples described herein (e.g., foam preforms) may be further shaped or molded by any of the methods known for forming articles from thermoplastic materials.

Another step of the method for forming compression molded foam includes providing a foam preform that has been foamed using any suitable blowing process (e.g., blowing using a physical and/or chemical blowing agent), and then compression molding the foam preform to form a compression molded foam.

In some examples, the foam preform is prepared by a process comprising (i) softening a pre-foam composition, a crosslinked pre-foam composition or combinations thereof (e.g., by heating at a first temperature at or above a softening temperature of the pre-foam composition, crosslinked pre-foam composition or combinations thereof); (ii) simultaneously or sequentially with the softening (when applicable), contacting the pre-foam composition, crosslinked pre-foam composition or combinations thereof with a first concentration or first pressure of a physical blowing agent sufficient to drive an amount of the physical blowing agent into the pre-foam composition, crosslinked pre-foam composition or combinations thereof; (iii) changing the concentration or pressure (e.g., decreasing the pressure or concentration) of the physical blowing agent to a second concentration or second pressure that is effective to foam the pre-foam composition, crosslinked pre-foam composition or combinations thereof, thereby forming a foam composition (e.g., a foam composition having a closed-cell structure); and, (iv) following the changing, cooling (when applicable) the foam composition to (e.g., cooling to a temperature below the softening temperature of the foam composition), to form a foam preform having an initial height. In some examples, this process is conducted with a composition comprising, consisting essentially of or consisting of a crosslinked pre-foam composition.

In other examples, the foam preform is prepared by (i) contacting (e.g., dissolving or suspending) the pre-foam composition, crosslinked pre-foam composition or combinations thereof with a first concentration of a chemical blowing agent, in some examples, at or above a softening temperature of the pre-foam composition, crosslinked pre-foam composition or combinations thereof; (ii) triggering the chemical blowing agent to foam the pre-foam composition, crosslinked pre-foam composition or combinations thereof, thereby forming a foam composition (e.g., a foam composition having a closed-cell structure); and, (iii) following the triggering, in some examples, cooling the foam composition to, e.g., a temperature below its softening temperature, to form a foam preform having an initial height. In some examples, this process is conducted with a composition comprising, consisting essentially of or consisting of a crosslinked pre-foam composition. In some examples, the "triggering" of the chemical blowing agent is performed by any suitable method, including heating the pre-foam composition, crosslinked pre-foam composition or combinations thereof comprising a concentration of the chemical blowing agent to a temperature sufficient to "trigger" the chemical blowing agent, wherein the concentration of the chemical blowing agent is effective to foam the pre-foam composition, crosslinked pre-foam composition or combinations thereof, thereby forming a foam composition (e.g., a foam composition having a closed-cell structure).

In some examples, the contacting comprises contacting at a pressure of from 10 MPa to 100 MPa (e.g., from 30 MPa to 100 MPa, 20 MPa to 80 MPa, 30 MPa to 60 MPa or 40 MPa to 70 MPa).

In some examples, whether the foam preform is prepared using a physical or chemical blowing agent, a foamed composition (e.g, in the form of a foam preform) can be compression molded. For example, the foamed composition can be compression molded by placing the foam preform in a compression mold having a height less than the initial height of the foam preform and closing the mold, thereby compressing the foam preform to the height of the mold. Simultaneously or sequentially with the compressing, the foam preform can be heated in the closed compression mold. During the compression molding, the temperature of at least a portion of the foam preform in the closed mold can be raised to a temperature within $\pm$ 30° C of the softening temperature of the foam composition. The temperature can be raised by heating the closed mold. Following the raising of the temperature, while the foam preform remains closed in the compression mold, the temperature of at least a portion of the foam preform can be lowered. The temperature can be lowered by cooling the closed mold. The lowering can lower the temperature of at least a portion of the foam preform to a temperature at least 35° C below the softening temperature of the foamed composition, thereby forming the compression molded foam. Following the cooling, the compression mold can be opened, and the compression molded foam can be removed from the compression mold.

Some examples contemplated herein are directed to compression molded components of articles of footwear or athletic equipment made in accordance with the compositions and processes described herein.

Other examples contemplated herein are directed to methods of manufacturing articles of footwear or athletic equipment. For example, the method can comprise providing a compression molded foam component of an article of footwear in accordance with the present disclosure, and combining the component with a footwear upper and an outsole to form the article of footwear. Similarly, the method can comprise providing a compression molded foam component of an article of athletic equipment in accordance with the present disclosure, and combining the compression molded foam component with other components to form a finished article of athletic equipment.

One method of making a compression molded foam (and compression molded foam articles) described herein comprises forming a foam preform and compression molding the foam preform to make a compression molded foam. In some examples, the foam preforms of the various examples described herein are obtained by blowing the pre-foam composition, the crosslinked composition, or both the pre-foam composition and the crosslinked composition by 150% to 240% (e.g., from 150% to 220 %; 150% to 200%, 175% to 225%, 180% to 230% or 160% to 240%) in at least one dimension (e.g., the vertical dimension) using a blowing agent. In some examples, the blown pre-foam composition, the crosslinked composition, or both the pre-foam composition and the crosslinked composition can be compression molded to 120% to 200% (e.g., from 120% to 180%; 130% to 190%; 150% to 200%; or 160% to 190%) in at least one dimension.

Thus for example, if the foaming of the pre-foam composition, the crosslinked composition, or both the pre-foam composition and the crosslinked composition is 200%, the blown pre-foam composition, the crosslinked composition, or both the pre-foam composition and the crosslinked composition can be compression molded by a net 20% by compression molding to 180%. In another example, if the pre-foam composition, the crosslinked composition, or both the pre-foam composition and the crosslinked composition is blown into a 20 mm (height) $\times$ 10 cm (width) $\times$ 5 cm (depth) slab, and the slab is compression molded in the height direction by 20%, the compression molded slab would have the dimensions 18 mm (height) $\times$ 10 cm (width) $\times$ 5 cm (depth). In some examples, the compression molding is substantially maintained.

In some examples, the foam preform is made using a process that involves impregnating a pre-foam composition, a crosslinked pre-foam composition or combinations thereof (e.g., at or above a softening temperature of the pre-foam composition, crosslinked pre-foam composition or combinations thereof) with a physical blowing agent at a first concentration or first pressure. The impregnated pre-foam composition, crosslinked pre-foam composition or combinations thereof can then be foamed, or can be cooled (when applicable) and re-softened (when applicable) for blowing at a later time. In some instances, the impregnated pre-foam composition, crosslinked pre-foam composition or combinations thereof is foamed by reducing the concentration or pressure of the physical blowing agent. The reduction in concentration of the physical blowing agent can release additional amounts of the impregnated physical blowing agent from the pre-foam composition, crosslinked pre-foam composition or combinations thereof, to further blow the pre-foam composition, crosslinked pre-foam composition or combinations thereof, forming a foam composition (e.g., a foam composition having a closed-cell structure).

In some examples, the compression molding process is conducted by heating the foam preform in a closed compression mold. The foam preform is heated to a temperature close to its softening temperature, to allow the foam to retain the shape of the compression mold. For example, the foam preform can be heated to a temperature within $\pm$ 30°C of its softening temperature, or within $\pm$ 20°C of its softening temperature, or within $\pm$ 10°C of its softening temperature, or within $\pm$ 5°C of its softening temperature. For example, the foam preform can be heated to a temperature of from 100°C to 250°C, or of from 140°C to 220°C, or of from 100°C to 150°C, or of from 130°C to 150°C.

The material used to form the compression mold can be any material which can withstand the temperatures used during the process, such as machined metals, including aluminum. The compression mold can be made using two pieces, such as a top and a bottom mold. Depending on the shape of the foam component to be molded, a multiple-piece mold may be used in order to more easily release the compression molded foam from the mold.

The compression molding of the foam preform in the compression mold can result in a closed skin forming on the final compression molded foam component. However, care should be taken during the compression molding not to subject the foam preform to conditions such that more than a desired amount of the closed cell structures of the foam collapse. One way to avoid collapsing more than a desired amount of the closed cell structures is to control the temperature of the polymeric composition, for example, by controlling the temperature of the mold. For example, during the compression molding step, the heating of the foam preform in the compression mold can be conducted for time of from 100 seconds to 1,000 seconds, or of from 150 seconds to 700 seconds.

Once the foam preform has been heated in the compression mold at the appropriate temperature for the desired length of time to soften the preform to the desired level, the softened preform is cooled, for example, to a temperature at least 35°C below its softening temperature, or at least 50°C below its softening temperature, or at least 80°C below its softening temperature, to re-solidify the softened foam, thereby forming the compression molded foam. Once cooled, the compression molded foam component is removed from the compression mold. Following the heating, the cooling of the foam preform in the compression mold can be conducted for a time of from 50 to 1,000 seconds, or for a time of from 100 to 400 seconds.

**Compositions**

Provided herein is a pre-foam composition as defined in claim 1. In various aspects, compositions are provided that can be foamed, i.e. can be used to form a foam composition. In some aspects, these compositions are referred to as a "pre-foam composition." In some aspects, the compositions can be used to generate foam compositions that are soft and have a high energy return making them useful for footwear. The compositions can be used to generate foams using any of a variety of methods known in the art. Thus, also provided herein is a foamed composition as defined in claim 11. In some aspects, the foams are generated using injection molding or injection molding followed by compression molding techniques. Thus, also provided herein is a compression molded foam as defined in claim 13. The foamed compositions can include components of articles of footwear as described above, for example a midsole 146 as depicted in FIGS. 1A-1B.

The compositions described herein, when used to form foams, in some aspects produced foams having surprisingly high energy return/resiliency values. These compositions also, when used to form foams, in some aspects produce foams having high split-tear values. The compositions can, in some aspects, be used to produce foams having other beneficial properties, including additional properties beneficial for use in footwear including as cushioning components. The compositions of the present disclosure can be foamed and/or molded using various methods. In one example, the polymeric compositions can be foamed as part of an injection molding process. Optionally, the injection molded foam can subsequently be compression molded. Compression molding of the injection molded foam can modify the properties of the polymeric foam, such as reducing the compression set of the foam, which can be beneficial for foams used in footwear-related applications. Foams formed from the polymeric compositions of the present disclosure can be used in footwear-related applications without being compression molded.

In some aspects, the alpha-olefin linking polymer can have an alpha-olefin monomer content of 20% to 40% by weight based upon an entire weight of the alpha-olefin linking polymer.

In some aspects, each of the A blocks include a large amount of polystyrene. For example, each of the A blocks can include at least 80%, 90% or more styrene repeat units based upon the number of repeat units in the A block. In some aspects, each of the A blocks consists essentially of polystyrene.

In some aspects, each of the B blocks includes a random copolymer of ethylene and a first alpha-olefin having 4, 5, 6, 7, or 8 carbon atoms. In some aspects, the B block is essentially a random copolymer of ethylene and octene, or is random copolymer of ethylene and butadiene.

In some aspects there can be more than one alpha-olefin linking polymer present in the composition. For example, in some aspects, the composition incudes a first alpha-olefin linking polymer and a second alpha-olefin linking polymer, wherein the first alpha-olefin linking polymer and the second alpha-olefin linking polymer are copolymers of ethylene and 1-butene, each having a different ratio of ethylene to 1-butene monomer content in the copolymer.

In some aspects, the composition includes 5 parts by weight to 15 parts by weight of the A-B-A block copolymer, 10 parts by weight to 20 parts by weight of the olefinic block copolymer, and 25 parts by weight to 35 parts by weight of the alpha-olefin linking polymers based upon an entire weight of the composition.

In some aspects, the composition includes an ethylene-vinyl acetate copolymer having a vinyl acetate content of 10% to 45% by weight based upon the weight of the ethylene-vinyl acetate copolymer.

In various aspects, the composition also includes comprising an ethylene-vinyl acetate copolymer having a vinyl acetate content of 5% to 55%, 5% to 50%, 10% to 50%, 10% to 45%, or 15% to 40% by weight based upon the weight of the ethylene-vinyl acetate copolymer.

The A-B-A block copolymer can be at least partially or fully hydrogenated. In some aspects, the A-B-A block copolymer has a degree of hydrogenation of 40% to 99%, 50% to 99%, 50% to 95%, 50% to 90%, 50% to 80%, or 60% to 80%.

As used herein, unless otherwise dictated by context, when two of the same type of components are said to be "different" this means that one has a different chemical composition from the other. The second alpha-olefin being different from the first alpha-olefin means the second alpha-olefin has a chemical formula that is different from the chemical formula of the first alpha-olefin.

Generally speaking, the A-B-A block copolymer can be at least partially unsaturated (e.g., comprising ethylenic unsaturation). Thus, for example, at least one of the repeating units can comprise ethylenic unsaturation. As used herein, the term "partially unsaturated" (e.g., comprising ethylenic unsaturation) generally means that the polymer can have from 20 mol% to 60 mol% unsaturation (e.g., from 20 mol% to 50 mol%, 20 mol% to 30 mol%; 25 mol% to 45 mol%; 30 mol% to 50 mol%; 20 mol% to 40 mol%; or 25 mol% to 40 mol% unsaturation, such as ethylenic unsaturation). But it should be understood that, by virtue of the fact that polymers comprising styrene repeating units comprise phenyl rings, they will be "partially unsaturated."

Generally speaking, partial unsaturation makes it possible to form covalent crosslinking (intermolecular and intramolecular).

Generally speaking, the A-B-A block copolymer has a weight average molecular weight (Mw) from 25,000 g/mol to $1.5 \times 10^6$ g/mol (e.g., from 250,000 g/mol to $1.5 \times 10^6$ g/mol, 25,000 g/mol to 100,000 g/mol; 50,000 g/mol to 200,000 g/mol, 75,000 g/mol to 150,000 g/mol; 100,000 g/mol to 300,000 g/mol; 250,000 g/mol to 750,000 g/mol; 300,000 g/mol to 800,000 g/mol; 250,000 g/mol to 650,000 g/mol; 500,000 g/mol to $1.5 \times 10^6$ g/mol; 750,000 g/mol to $1.5 \times 10^6$ g/mol; or 650,000 g/mol to $1.3 \times 10^6$ g/mol).

Some examples of polymers disclosed herein include those available from Kraton Performance Polymers Inc., Houston, TX, such as KRATON® D styrene-butadiene-styrene (SBS) polymer; KRATON® D styrene-isoprene-styrene/styrene-isoprene-butadiene-styrene polymer (SIS)/(SIBS); KRATON® G styrene-ethyelen-butadiene-styrene/styrene-ethylene-propylene-styrene (SEBS/SEPS) polymer; and KRATON® FG maleic anhydride-grafted styrene-ethyelen-butadiene-styrene (SEBS) polymer. Some further examples also include SEPTON® hydrogenated polymer (e.g., SEPTON® 4055; SEPTON® 8006; SEPTON® 4077; and SEPTON® 4099) available from Kuraray Co., Ltd., Tokyo, Japan. Other examples include hydrogenated SEBS block copolymers available from Asahi Kasei Chemicals Corporation (e.g., the various grades of TUFTEC® hydrogenated SEBS block copolymers, including TUFTEC® P1083). While not being bound by any specific theory, it is believed that the level of hydrogenation of the polymer, which in some examples influences (e.g., reduces) the level of ethylenic unsaturation of the polymer, can influence the crystallinity and/or rigidity of the polymer. Thus, for example, partially hydrogenated polymer (e.g., those that are 50 to 80% hydrogenated) can be less crystalline and more rigid than their non-hydrogenated counterparts (e.g., those that are less than 50% hydrogenated). Examples of unsaturated olefinic copolymers disclosed herein include the TAFMER® unsaturated olefin copolymers available from Mitsui Chemicals America, Inc., Rye Brook, NY (e.g., TAFMER® DF110 and TAFMER® DF605 ethylene/unsaturated olefin copolymers); and ENGAGE@ and INFUSE® olefin block copolymers, both available from The Dow Chemical Company, Midland, MI (e.g., INFUSE® 9107 olefin block copolymer).

The compositions of the various examples described herein can also comprise at least one ethylene vinyl acetate copolymer. And, in some instances, the at least one ethylene vinyl acetate copolymer comprises two different ethylene vinyl acetate copolymers.

In some examples, the at least one ethylene vinyl acetate copolymer is a random copolymer. In other examples, the at least one ethylene vinyl acetate copolymer comprises an ethylene content. In still other examples, the at least one ethylene vinyl acetate copolymer is at least partially unsaturated (e.g., comprises ethylenic unsaturation). In some examples, the pre-foam composition comprises 20 wt.% to 60 wt.% (e.g., from 25 wt.% to 50 wt.%; 30 wt.% to 50 wt.%; 40 wt.% to 60 wt.%; 30 wt.% to 60 wt.%; or 45 wt.% to 60 wt.%) of the at least one ethylene vinyl acetate copolymer. A suitable ethylene vinyl acetate copolymer includes EVLAX® 40L-03 ethylene vinyl acetate resin available from E.I. DuPont de Nemours Co., Wilmington, DE. Other suitable ethylene vinyl acetate copolymers include EVATHENE® UE659 and EVATHENE® UE3300 ethylene vinyl acetate copolymers available from USI Corporation, Taiwan, ROC.

In some examples, the pre-foam compositions comprise 1 to 10 wt.% of a first ethylene vinyl acetate copolymer and 5 to 50 wt.% of a second ethylene vinyl acetate copolymer, wherein the wt.% amounts are relative to the weight of the pre-foam composition.

In one example, when the at least one ethylene vinyl acetate copolymer comprises two different ethylene vinyl acetate copolymers, the at least two different ethylene vinyl acetate copolymers can differ in at least vinyl acetate content. Thus, for example, a first ethylene vinyl acetate copolymer can comprise 15 to 40 mol% vinyl acetate (e.g., from 15 to 30 mol%; 25 to 35 mol%; or 20 mol% to 40 mol%) and a second ethylene vinyl acetate copolymer comprises 15 to 30 mol% (e.g., from 15 to 25 mol%; 20 mol% to 30 mol%; or 15 mol% to 30 mol%) vinyl acetate.

In particular examples, the pre-foam compositions described herein do not include an ethylene vinyl acetate copolymer (EVA). In other words, the pre-foam compositions described herein can be free of an EVA component.

Alternatively, the pre-foam compositions described herein can comprise from 5 phr to 50 phr of the EVA component. The pre-foam compositions can comprise from 10 phr to 45 phr of the EVA component. The pre-foam compositions can comprise from 20 phr to 45 phr of the EVA component. The pre-foam compositions can comprise from 25 phr to 40 phr of the EVA component. The pre-foam compositions can comprise from 25 phr to 35 phr of the EVA component. The pre-foam compositions can comprise from 30 phr to 37 phr of the EVA component. As used herein, the EVA component is understood to refer to all the ethylene vinyl acetate copolymers present in the pre-foam composition. Thus, the concentration of the EVA component in a pre-foam composition refers to the total concentration of each ethylene vinyl acetate copolymer present in the composition. In some pre-foam compositions, the EVA component can be formed of only a single ethylene vinyl acetate copolymer. In other pre-foam compositions, the EVA component can be formed of a plurality of different ethylene vinyl acetate copolymers.

Particular ratios of the components of the pre-foam compositions have been found to produce foams having beneficial properties. As used herein and unless otherwise indicated or dictated by context, the ratio of a first component to a second component is understood to the parts per hundred of resin (phr) of the first component divided by the phr of the second component present in the composition. In some aspects, a sum of ratios is presented, which is understood to mean the sum of the specific ratios described.

The composition can be a composition having a ratio of the unsaturated olefin component to the EVA component of 2.0 to 4.0. The ratio of the unsaturated olefin component to the EVA component can be from 1.5 to 3.0. The ratio of the unsaturated olefin component to the EVA component can be from 1.5 to 2.5. The ratio of the unsaturated olefin component to the EVA component can be from 2.0 to 2.5

It has been found that, in some aspects, a ratio II of a total parts by weight of the A-B-A block copolymer present in the composition to a total parts by weight of the linking polymer present in the composition has a strong impact on the desired softness and energy return of the foamed compositions. In some aspects, foam compositions having an improved softness and energy return can be formed from compositions having a ratio II from 1.00 to 5.00, 1.00 to 4.00, 1.50 to 4.00, 1.50 to 3.50, 1.00 to 3.00, or 2.00 to 4.00.

The compositions can also comprise a blowing agent, a free-radical initiator or combinations thereof.

The blowing agent can be any appropriate type of physical blowing agent known in the art including nitrogen, carbon dioxide, hydrocarbons (e.g., propane, pentane, isopentane, and cyclopentane), chlorofluorocarbons, noble gases (e.g., helium (He), neon (Ne), argon (Ar), krypton (Kr), and xenon (Xe)) and/or mixtures thereof. In one example, the blowing agent comprises nitrogen. The blowing agent may be supplied in any flowable physical state such as a gas, a liquid, or a supercritical fluid. According to one example, a blowing agent source provides a blowing agent (e.g., carbon dioxide, nitrogen, and methanol) that is in a supercritical fluid state upon contacting (e.g., injection into) the pre-foam compositions of the various examples described herein, e.g., when the pre-foam compositions are formed in an extruder (e.g., a twin-screw extruder).

Alternatively, the blowing agent can be any appropriate type of chemical blowing agent known in the art including carbonates (e.g., ammonium carbonate and carbonates of alkali metals), azo compounds, diazo compounds, and combinations thereof. Chemical blowing agents include 2,2'-azobis(2-cyanobutane), 2,2'-azobis(methylbutyronitrile), azodicarbonamide, p,p'-oxybis(benzene sulfonyl hydrazide), p-toluene sulfonyl semicarbazide, p-toluene sulfonyl hydrazide, and combinations thereof. In the case of chemical blowing agents, gaseous products (e.g., nitrogen gas) and other by-products are formed by a chemical reaction(s), promoted by the process or by a reacting polymer's exothermic heat. Since the blowing reaction occurs forming low molecular weight compounds acting as the blowing gas, additional exothermic heat may also be released.

In some examples, the compositions described herein may require a temperature (e.g., from heating) of from 130°C to 210°C (e.g., from 150°C to 190°C or 165°C to 195°C-such as temperatures to which an extruder and/or a mold might be heated) to "trigger" the chemical blowing agent to "decompose" to produce the gas(es) necessary to transform the pre-foam compositions of the various examples described herein into the foam compositions of the various examples described herein.

Examples of blowing agents include UNICELL brand blowing agents, such as UNICELL-D600 MT, available from Dongjin Semichem Co., Ltd., Seoul, Korea.

In some examples, a combination of physical and chemical blowing agents can be used.

The pre-foam compositions of the various examples described herein can also comprise metal oxides, organic acids, fillers, nucleating agents, and combinations thereof. Examples of metal oxides include zinc oxide, titanium dioxide, and combinations thereof. Examples of organic acids include $C_3$-$C_{30}$-alkanoic acids (e.g., $C_{14}$-$C_{30}$-alkanoic acids such as fatty acids) such as stearic acid and combinations of two or more $C_3$-$C_{30}$-alkanoic acids. Calcium carbonate is an example of a material which can be used both as a filler and as a nucleating agent.

The pre-foam compositions of the various examples described herein can also comprise one or more crosslinking agents. Examples of crosslinking agents include aliphatic unsaturated amides, such as methylenebisacryl- or -methacrylamide or ethylenebisacrylamide; aliphatic esters of polyols or alkoxylated polyols with ethylenically unsaturated acids, such as di(meth)acrylates or tri(meth)acrylates of butanediol or ethylene glycol, polyglycols or trimethylolpropane;

di- and triacrylate esters of trimethylolpropane; acrylate and methacrylate esters of glycerol and pentaerythritol; allyl compounds, such as allyl (meth)acrylate, alkoxylated allyl (meth)acrylate, triallyl cyanurate, triallyl isocyanurate, maleic acid diallyl ester, poly-allyl esters, vinyl trimethoxysilane, vinyl triethoxysilane, polysiloxane comprising at least two vinyl groups, tetraallyloxyethane, tetraallyloxyethane, triallylamine, and tetraallylethylenediamine. Mixtures of the crosslinking agents can also be employed.

The pre-foam compositions of the various examples described herein can also comprise one or more free-radical initiators, such as an organic peroxide, a diazo compound (e.g., those described in U.S. Patent No. 6,303,723) or combinations of two or more free-radical initiators. Examples of organic peroxides that can be used as free-radical initiators include dicumyl peroxide; n-butyl-4,4-di(t-butylperoxy) valerate; 1,1-di(t-butylperoxy)3,3,5-trimethylcyclohexane; 2,5-dimethyl-2,5-di(t-butylperoxy) hexane; di-t-butyl peroxide; di-t-amyl peroxide; t-butyl peroxide; t-butyl cumyl peroxide; 2,5-dimethyl-2,5-di(t-butylperoxy)hexyne-3; di(2-t-butylperoxyisopropyl)benzene; dilauroyl peroxide; dibenzoyl peroxide; t-butyl hydroperoxide; and combinations thereof.

The pre-foam compositions of the various examples described herein can be solids or liquids at a temperature of 25°C.

The pre-foam compositions of the various examples described herein can be crosslinked to form crosslinked pre-foam compositions. The pre-foam compositions can be crosslinked using various methods, including chemical crosslinking methods or crosslinking methods using actinic radiation (e.g., thermal radiation, UV light, electron beam and gamma radiation).

Those of ordinary skill in the art will also recognize that there can be intramolecular crosslinking occurring between portions of a polymer disclosed herein. This crosslinking can occur in the presence or in the absence of an "external" crosslinking agent such as the one or more crosslinking agents described herein.

In some examples, the pre-foam compositions of the various examples described herein can be crosslinked to form crosslinked pre-foam compositions in the presence of a blowing agent (e.g., a chemical blowing agent or a physical blowing agent, as described herein).

In some examples, the crosslinked pre-foam compositions of the various examples described herein can be solids or liquids, but generally are solids (e.g., thermoplastic solids) at a temperature of 25°C or higher (e.g., at a temperature of from 25°C to 220°C and a pressure of from 500 kPa to 100 MPa). In some examples, the foam compositions of the various examples described herein are generally are solids (e.g., thermoplastic solids) at a temperature of 25°C or higher (e.g., at a temperature of from 25°C to 220°C and a pressure of from 500 kPa to 100 MPa).

In some examples, the crosslinked pre-foam compositions of the various examples described herein can further comprise at least one ethylene vinyl acetate copolymer, as defined herein.

Foam compositions are also contemplated herein and are interchangeably called "foam preforms." As used herein, the term "foam compositions" refers to:

- a crosslinked pre-foam composition that is foamed (e.g., foamed using a blowing agent (physical and/or chemical)) before crosslinking, after crosslinking or substantially simultaneously with crosslinking; or
- combinations of a pre-foam composition and a crosslinked pre-foam composition (e.g., a combination of a pre-foam composition and a crosslinked pre-foam composition, wherein the combination is foamed (e.g., foamed using a blowing agent (physical and/or chemical)) after the combination is formed either after mixing two such compositions or after partially crosslinking the pre-foam composition, such that some crosslinked pre-foam composition is formed in situ).

In some examples, the foam compositions of the various examples described herein can further comprise at least one ethylene vinyl acetate copolymer, as defined herein.

Some foam compositions of the various examples described herein can form solid (e.g., thermoplastic) foam materials. These thermoplastic foam materials can be used as "foam preforms" and the foam preforms can subsequently be compression molded. The foam compositions can have a density of 0.08 g/cm$^3$ to 0.15 g/cm$^3$ (e.g., from 0.10 g/cm$^3$ to 0.12 g/cm$^3$). In some examples, such foam preforms have an energy return from 60% to 85% (e.g., from 65% to 80%; 65% to 75%; 70% to 80%; or 75% to 80%).

Some foam compositions of the various examples described herein (e.g., foam preforms) can be compression molded to form compression molded foam. Such compression molded foam can have a density of from 0.15 g/cm$^3$ to 0.30 g/cm$^3$ (e.g., from 0.15 g/cm$^3$ to 0.2 g/cm$^3$).

**Definitions**

Unless defined otherwise, all technical and scientific terms used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the specification and relevant art and should not be interpreted in an idealized or overly formal sense unless expressly defined herein.

All publications, patents, and patent applications cited in this specification are cited to disclose and describe the methods and/or materials in connection with which the publications are cited. Any lexicographical definition in the publications, patents, and patent applications cited that is not also expressly repeated in the instant specification should not be treated as such and should not be read as defining any terms appearing in the accompanying claims.

Although any methods and materials similar or equivalent to those described herein can also be used in the practice or testing of the present disclosure, the preferred methods and materials are now described. Functions or constructions well-known in the art may not be described in detail for brevity and/or clarity. Aspects of the present disclosure will employ, unless otherwise indicated, techniques of nanotechnology, organic chemistry, material science and engineering and the like, which are within the skill of the art. Such techniques are explained fully in the literature.

It should be noted that ratios, concentrations, amounts, and other numerical data can be expressed herein in a range format. Where the stated range includes one or both of the limits, ranges excluding either or both of those included limits are also included in the disclosure, e.g. the phrase "x to y" includes the range from 'x' to 'y' as well as the range greater than 'x' and less than 'y'. The range can also be expressed as an upper limit, e.g. 'x, y, z, or less' and should be interpreted to include the specific ranges of 'x', 'y', and 'z' as well as the ranges of 'less than x', less than y', and 'less than z'. Likewise, the phrase 'x, y, z, or greater should be interpreted to include the specific ranges of 'x', 'y', and 'z' as well as the ranges of greater than x', greater than y', and greater than z'. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "about 0.1% to 5%" should be interpreted to include not only the explicitly recited values of 0.1% to 5%, but also include individual values (e.g., 1%, 2%, 3%, and 4%) and the sub-ranges (e.g., 0.5%, 1.1%, 2.4%, 3.2%, and 4.4%) within the indicated range.

Specified values used herein include traditional rounding according to significant figures of the numerical value.

The articles "a" and "an," as used herein, mean one or more when applied to any feature in aspects of the present disclosure described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

As used herein, the term "units" can be used to refer to individual (co)monomer units such that, for example, styrenic repeat units refers to individual styrene (co)monomer units in the polymer. In addition, the term "units" can be used to refer to polymeric block units such that, for example, "styrene repeating units" can also refer to polystyrene blocks; "units of polyethylene" refers to block units of poplyethylene; "units of polypropylene" refers to block units of polypropylene; "units of polybutylene" refers to block units of polybutylene, and so on. Such use will be clear from the context.

## EXAMPLES

### Materials

The materials referred to throughout the examples are, unless otherwise indicated, described in Table 1 below. The partially hydrogenated SEBS block copolymers from Asahei Kasei (marketed under the trade name TUFTEC®) all have an elongation at break of greater than 650% when measured using ASTM D638. The P1083 (and the research grade JT-83) have a styrene content of about 20%, while the P5051 has a styrene content of about 47%. The SEBS copolymer from KRATON Polymers (KRATON® G1651E) has a styrene content of about 30%-33%. The ENGAGE@ polyolefin elastomers are copolymers of ethylene and octene, while the TAFMER® linking polymers are random copolymers of ethylene and 1-butene. For materials where the supplier is not listed in Table 1 (e.g. stearic acid), these materials are generally available from a variety of suppliers.

**Table 1. Materials Used In Examples**

| Trade Name | Ingredient | Description | Supplier |
|---|---|---|---|
| TUFTEC® P1083 | Partially hydrogenated SEBS block copolymer | Aromatic/aliphatic copolymer | Asahei Kasei |
| TUFTEC® JT-83 (research grade of P1083) | Partially hydrogenated SEBS block copolymer | Aromatic/aliphatic copolymer | Asahei Kasei |

(continued)

| Trade Name | Ingredient | Description | Supplier |
|---|---|---|---|
| TUFTEC® P5051 | Partially hydrogenated SEBS block copolymer | Aromatic/aliphatic copolymer | Asahei Kasei |
| KRATON® G1651E | partially hydrogenated SEBS block copolymer | Aromatic/aliphatic copolymer | KRATON Polymers Group |
| INFUSE™ 9000 OBC | Olefin block copolymer | Olefinic Copolymer | Dow Chemical Co. |
| INFUSE™ 9107 OBC | Olefin block copolymer | Olefinic Copolymer | Dow Chemical Co. |
| INFUSE™ 9530 OBC | Olefin block copolymer | Olefinic Copolymer | Dow Chemical Co. |
| ENGAGE® 8480 | Polyolefin elastomer | Olefinic Copolymer | Dow Chemical Co. |
| ENGAGE® 8540 | Polyolefin elastomer | Olefinic Copolymer | Dow Chemical Co. |
| ENGAGE® 8440 | Polyolefin elastomer | Olefinic Copolymer | Dow Chemical Co. |
| TAFMER® DF-110 | Alpha-olefin copolymer | Linking Polymer | Mitsui Elastomers |
| TAFMER® DF-605 | Alpha-olefin copolymer | Linking Polymer | Mitsui Elastomers |
| EVA-659 | Ethylene vinyl acetate copolymer | Ethylene vinyl acetate (EVA) | USI Corporation |
| EVA-3330 | Ethylene vinyl acetate copolymer | EVA | USI Corporation |

**Table 1 (Continued). Materials Used In Examples**

| Trade Name | Ingredient | Description | Supplier |
|---|---|---|---|
| ELVAX® 360 | Ethylene vinyl acetate copolymer | EVA | DuPont |
| ST/AC | Stearic Acid | Organic acid | |
| ZnO | Zinc oxide | Metal oxide | |
| TiO$_2$ | Titanium Dioxide | Metal oxide | |
| CaCO$_3$ | Calcium Carbonate | Filler/Nucleating Agent | |
| TAC-50GR | Triallyl cyanurate | Crosslinking agent | |
| Color base | | Coloring agent | |
| 27020 | Blue tint | Coloring agent | |
| EVA 1375 | Red pigment | Coloring agent | |
| 8502 | Black pigment | Coloring agent | |
| R929 | | Coloring agent | |
| UNICELL D600-MT (MB-50%) | | Blowing agent | Tramaco |
| JTR/TL | | Blowing agent | Kumyang |
| COLINK 101-45GE | 2,5-Dimethyl-2,5-di(tert-butylperoxy)hexane | Free-radical initiator | |

(continued)

| Trade Name | Ingredient | Description | Supplier |
|---|---|---|---|
| DCP | Dicumyl peroxide | Free-radical initiator | |

**Example 1: Batch Process of Preparing Compositions Capable of Being Foamed**

The pre-foam compositions, compositions prior to being foamed, described in Tables 3 and 4 were prepared. Examples A to N and P to T (marked * in the following tables) are examples that fall outside the scope of the present claims. Examples O, U, V' and W' are example compositions that fall within the scope of the present claims. Some of the pre-foam compositions were first compounded using the components shown in Table 2 to form pre-foam base compositions (PFBCs): PFBC 1 and PFBC 2, according to Example 1. These PFBCs were then used to prepare the foam compositions shown in Tables 3a-e and 4. The properties of the foam compositions are described in Table 5. In some instances, PFBC 1 or PFBC 2 were further modified as shown in Tables 3a-e, 4 and 5 by adding additional materials. Other formulations were prepared directly, without first forming a pre-foam base composition.

## Table 2: Composition of Pre-Foam Base Compositions Used For Making Pre-Foam Compositions

| TABLE 2 | Pre-Foam Base Composition 1 (PFBC 1) | Pre-Foam Base Composition 2 (PFBC 2) | Formulations A, B, C and D |
|---|---|---|---|
| Trade Name | phr in PFBC1 | phr in PFBC2 | phr in formulation |
| TUFTEC® P1083 | 10.0 | 16.6 | ** |
| TUFTEC® P5051 | 0.0 | 0.0 | ** |
| TUFTEC® JT-83 | 0.0 | 0.0 | ** |
| KRATON® D G1651E | 0.0 | 0.0 | ** |
| INFUSE™ OBC9000 | 0.0 | 0.0 | ** |
| INFUSE™ OBC9107 | 15.0 | 24.9 | ** |
| INFUSE™ OBC9507 | 0.0 | 0.0 | ** |
| INFUSE™ OBC9530 | 0.0 | 0.0 | ** |
| ENGAGE® 8480 | 0.0 | 0.0 | ** |
| ENGAGE® 8540 | 0.0 | 0.0 | ** |
| ENGAGE® 8440 | 0.0 | 0.0 | ** |
| TAFMER® DF-110 | 12.0 | 19.9 | ** |
| TAFMER® DF-605 | 18.0 | 29.9 | ** |
| EVA-659 | 40.0 | 0.0 | ** |
| EVA-3330 | 5.0 | 0.0 | ** |
| ELVAX® 360 | 0.0 | 0.0 | ** |
| ELVAX® 40L-03 | 0.0 | 0.0 | ** |
| ST/AC | 1.0 | 1.7 | 0.0 |
| ZnO | 0.8 | 1.4 | 1.5 |
| TiO$_2$ | 0.0 | 0.0 | 3.6 |
| CaCO$_3$ | 0.0 | 0.0 | 5.0 |
| TAC-50GR | 0.3 | 0.5 | 0.0 |
| Color base | 11.0 | 18.3 | 0.0 |
| 27020 | 0.0 | 0.0 | 0.0 |
| EVA 1375 | 0.0 | 0.0 | 0.0 |
| 8502 | 0.0 | 0.0 | 0.0 |
| R929 | 0.0 | 0.0 | 0.1 |
| UNICELL D600-MT | 11.5 | 11.5 | 0.0 |
| JTR/TL | 0.0 | 0.0 | 9.8 |
| COLINK 101-45GE | 0.0 | 0.0 | 0.0 |
| DCP | 0.7* | 0.7* | 0.7 |
| *: concentration in formulation | | | |
| **: See Table 2 and 3 | | | |

The pre-foam compositions were formed using a batch process where the partially hydrogenated SEBS block copolymer and the olefin polymer were combined in a kneader for about 20 minutes. During this time, the kneader temperature was maintained at a temperature of from about 100°C to about 120°C. In some examples, the ethylene vinyl acetate copolymer (the EVA component of the composition)and/or pigments was added to the mixture the partially hydrogenated SEBS block copolymer and the olefin polymer.

Next, where present, the one or more metal oxide, one or more organic acid, and one or more crosslinking agent were added to the mixture. The combined mixture including the partially hydrogenated SEBS block copolymer and the olefin polymer, as well as (if present) the EVA along with the metal oxide, organic acid, and crosslinking agent were mixed in the kneader for about 20 minutes, while the kneader temperature was held at a temperature of from about 100°C to about 120°C.

Next, the kneader temperature was lowered to about 90°C or below. The combined mixture in the kneader was then combined with the blowing agent and a free radical initiator. The kneaded mixture was then subjected to pelletization using a die that is cooled to maintain the temperature at about 90°C or below.

**Table 3a: Composition of foams A to D**

| Composition | A* | B* | C* | D* |
|---|---|---|---|---|
| Material | Parts by Wt. | Parts by Wt. | Parts by Wt. | Parts by Wt. |
| TUFTEC® JT-83 | 20.0 | 20.0 | 20.0 | 20.0 |
| INFUSE™ 9530 OBC | 0.0 | 0.0 | 0.0 | 20.0 |
| ENGAGE® 8440 | 0.0 | 0.0 | 20.0 | 0.0 |
| ENGAGE® 8480 | 20.0 | 0.0 | 0.0 | 0.0 |
| ENGAGE® 8540 | 0.0 | 20.0 | 0.0 | 0.0 |
| ELVAX® 360 | 60.0 | 60.0 | 60.0 | 60.0 |
| ZnO | 1.5 | 1.5 | 1.5 | 1.5 |
| $TiO_2$ | 3.6 | 3.6 | 3.6 | 3.6 |
| $CaO_3$ | 5.0 | 5.0 | 5.0 | 5.0 |
| R929 | 0.1 | 0.1 | 0.1 | 0.1 |
| JTR/TL | 9.8 | 9.8 | 9.8 | 9.8 |
| Total Parts by Wt. | 120.7 | 120.7 | 120.7 | 120.7 |

**Table 3b: Composition of foams E to J**

| Composition | E* | F* | G* | H* | I* | J* |
|---|---|---|---|---|---|---|
| Material | Parts by Wt. | Parts by Wt. | Parts by Wt. | Parts by Wt. | Parts by Wt. | Parts by Wt. |
| PFBC 2 (MB2) | 70.0 | 90.0 | 70.0 | 100.0 | 50.0 | 80.0 |
| TUFTEC® JT-83 | 10.0 | 10.0 | 10.0 | 0.0 | 10.0 | 0.0 |
| TUFTEC® P5051 | 0.0 | 0.0 | 0.0 | 0.0 | 20.0 | 0.0 |
| INFUSE™ 9000 OBC | 0.0 | 0.0 | 0.0 | 0.0 | 0.0 | 0.0 |
| INFUSE™ 9530 OBC | 20.0 | 0.0 | 20.0 | 0.0 | 20.0 | 20.0 |
| ZnO | 1.0 | 1.0 | 1.0 | 1.0 | 1.0 | 1.0 |
| ST/AC | 1.0 | 1.0 | 1.0 | 1.0 | 1.0 | 1.0 |
| TAC-GR50 | 0.3 | 0.2 | 0.4 | 0.4 | 0.3 | 0.4 |
| D600MT | 8.9 | 10.0 | 8.9 | 15.2 | 8.9 | 4.7 |
| DCP | 0.0 | 0.4 | 0.0 | 0.0 | 0.0 | 0.0 |
| 101-45GE | 0.9 | 0.9 | 0.8 | 0.8 | 0.9 | 0.8 |
| Total Parts by Wt. | 112.0 | 113.5 | 112.1 | 118.4 | 112.0 | 107.9 |

**Table 3c: Composition of foams K to O**

| Composition | K* | L* | M* | N* | O* |
|---|---|---|---|---|---|
| Material | Parts by Wt. | Parts by Wt. | Parts by Wt. | Parts by Wt. | Parts by Wt. |
| PFBC 2 (MB2) | 60.0 | 80.0 | 100.0 | 100.0 | 70.0 |
| TUFTEC® JT-83 | 0.0 | 0.0 | 0.0 | 0.0 | 10.0 |
| TUFTEC® P5051 | 0.0 | 0.0 | 0.0 | 0.0 | 0.0 |
| INFUSE™ 9000 OBC | 0.0 | 0.0 | 0.0 | 0.0 | 20.0 |
| INFUSE™ 9530 OBC | 40.0 | 20.0 | 0.0 | 0.0 | 0.0 |
| ZnO | 1.0 | 1.0 | 1.0 | 1.0 | 1.0 |
| ST/AC | 1.0 | 1.0 | 1.0 | 1.0 | 1.0 |
| TAC-GR50 | 0.4 | 0.4 | 0.4 | 0.4 | 0.3 |
| D600MT | 4.4 | 8.6 | 5.0 | 8.6 | 8.9 |
| DCP | 0.0 | 0.0 | 0.0 | 0.0 | 0.0 |
| 101-45GE | 0.8 | 0.8 | 0.8 | 0.8 | 0.9 |
| Total Parts by Wt. | 107.6 | 111.8 | 108.2 | 111.8 | 112.0 |

**Table 3d: Composition of foams P to T**

| Composition | P* | Q* | R* | S* | T* |
|---|---|---|---|---|---|
| Material | Parts by Wt. | Parts by Wt. | Parts by Wt. | Parts by Wt. | Parts by Wt. |
| PFBC 2 (MB2) | 70.0 | 100.0 | 60.0 | 70.0 | 100.0 |
| TUFTEC® JT-83 | 10.0 | 0.0 | 0.0 | 10.0 | 0.0 |
| TUFTEC® P5051 | 0.0 | 0.0 | 0.0 | 0.0 | 0.0 |
| INFUSE™ 9000 OBC | 0.0 | 0.0 | 0.0 | 0.0 | 0.0 |
| INFUSE™ 9530 OBC | 20.0 | 0.0 | 40.0 | 20.0 | 0.0 |
| ZnO | 1.0 | 1.0 | 1.0 | 1.0 | 1.0 |
| ST/AC | 1.0 | 1.0 | 1.0 | 1.0 | 1.0 |
| TAC-GR50 | 0.3 | 0.4 | 0.4 | 0.4 | 0.4 |
| D600MT | 8.6 | 8.8 | 8.3 | 8.9 | 15.2 |
| DCP | 0.0 | 0.0 | 0.0 | 0.0 | 0.0 |
| 101-45GE | 0.9 | 0.8 | 0.8 | 0.8 | 0.8 |
| Total Parts by Wt. | 111.8 | 116.5 | 111.5 | 112.1 | 118.4 |

**Table 3e: Composition of foams U, V' and W'**

| Composition | U | V' | W' |
|---|---|---|---|
| Material | Parts by Wt. | Parts by Wt. | Parts by Wt. |
| PFBC 1 (MB1) | 100.0 | 100.0 | 100.0 |
| ZnO | 1.0 | 1.0 | 1.0 |
| ST/AC | 1.0 | 1.0 | 1.0 |

(continued)

| Composition | U | V' | W' |
|---|---|---|---|
| Material | Parts by Wt. | Parts by Wt. | Parts by Wt. |
| TAC-GR50 | 0.4 | 1.0 | 0.6 |
| D600MT | 8.8 | 8.4 | 7.9 |
| DCP | 0.0 | 0.0 | 0.0 |
| 101-45GE | 0.8 | 0.2 | 0.6 |
| Total Parts by Wt. | 112.0 | 111.6 | 111.1 |

**Example 2: Continuous Process of Preparing Pre-Foam Compositions**

Pre-foam compositions can be prepared using a continuous process where the styrenic copolymer component and the unsaturated olefin component are pre-mixed in a hopper and fed into a twin-screw extruder. The zone in the twin-screw extruder into which the styrenic copolymer component and the unsaturated olefin component are fed (ZONE 1) is held at a temperature of from about 100°C to about 120°C. When included in the pre-foam composition, the optional EVA component and/or pigments are pre-mixed with the styrenic copolymer component and the unsaturated olefin component.

Next, one or more metal oxide, one or more organic acid, and one or more crosslinking agent are added to the mixture of polymer and unsaturated olefin The particle size of the metal oxide used was less than 1 micron. The combined mixture of the styrenic copolymer component, the unsaturated olefin component, the optional EVA component, and the metal oxide, organic acid, and crosslinking agent are mixed in ZONE 1 of the twin-screw extruder at a temperature of from about 100°C to about 120°C until thoroughly mixed.

The combined mixture of the styrenic copolymer component, the, unsaturated olefin component, the optional EVA component, and the metal oxide, organic acid, and crosslinking agent move to ZONE 2 of the twin-screw extruder, where the temperature is about 90°C or below. The combined mixture of the styrenic copolymer component, the unsaturated olefin component, the EVA component, and the metal oxide, organic acid, and crosslinking agent are then combined in ZONE 2 with a blowing agent and a free radical initiator.

Next, the mixture of the styrenic copolymer component, the unsaturated olefin component, the optional EVA component, and the metal oxide, organic acid, crosslinking agent, blowing agent, and free radical initiator is then subjected to pelletization using a die that is cooled to maintain the temperature at about 90°C or below. The pelletization can performed underwater, thus cooling the resulting pellets as they exit the pelletization die.

**Example 3: Forming Foam Articles from Pre-Foam Compositions**

Pellets made according to the batch process described in Examples 1 using the pre-foam composition formulations described in Tables 1-4 were injection molded (IM) into a pre-heated mold where the mold temperature was, from about 170°C to about 180°C. The mold temperature was above the decomposition temperature of the chemical blowing agent, which decomposed producing gas in the softened composition and foaming it. The mold temperature was also above the initiation temperature of the free-radical initiator, producing a polymerization reaction which crosslinked the unsaturated styrenic copolymer component with the unsaturated olefin component of the composition.

As indicated in Table 5, some of the pre-foam compositions were foamed and injection molded in a single-step process (IM) to produce the finished molded foam article without a compression molding step, while other pre-foam compositions were foamed and molded using a process in which the pre-foam composition was first injection molded to form a molded foam pre-foam, then the molded foam pre-form was annealed, and then the annealed molded foam pre-form was compression molded to produce the finished molded foam article (IM + CM).

For the pre-foam compositions which were injection molded and subsequently compression molded to produce the finished molded foam articles (IM + CM), the injection molded foam preform was taken through an annealing process in which the foam preform was heated to a temperature of about 70°C to about 80°C for about 10 to about 15 minutes; then cooled to a temperature of about 60°C to about 70°C and held at that temperature for about 10 to about 15 minutes; next the preform was cooled to a temperature of about 50°C to about 60°C and held at that temperature for about 10 to about 15 minutes; then cooled to a temperature of about 45°C to about 55°C and held at that temperature for about 10 to about 15 minutes. The annealed molded foam preform was then washed with water (about 35°C to about 40°C) for about 10 to about 15 minutes and subsequently dried for 24 hours.

The annealed molded foam preform was then placed in a compression mold which is at least 10% smaller at least one dimension relative to its initial foamed, molded and annealed state prior to the compression molding. During the compression molding process, the foam preform is heated to a surface temperature of from about 130°C to about 150°C. Then the foam preform is cooled to a surface temperature of about 30°C in about 15 minutes or less (e.g., in about 12 minutes or less) to give a finished compression molded foam article.

While this experiment used the pre-foam compositions only to produce injection molded foam articles (IM) and injection molded and compression molded foam articles (IM + CM) using the processes described above, the pre-foam compositions described herein can be foamed and/or molded using other types of processes known in the art. For example, these pre-foam compositions can be used to form slab foam, particulate (e.g., bead) foams, etc. These forms of foam can then be used in various ways. For example, slab foam can be formed, and then can be used as formed as a final component, or can be compression molded to form a final component. Pellets of the pre-foam compositions can be used to form individual particulate foams, or can be foamed and molded to form molded foam articles.

**Table 4. Compositions and Component Ratios for Foams**

| Composition | A* | B* | C* | D* | E* |
|---|---|---|---|---|---|
| **Aromatic/Aliphatic Block Copolymer (Parts by Wt.)** | 20.0 | 20.0 | 20.0 | 20.0 | 19.3 |
| **Olefinic Copolymer (Parts by Wt.)** | 20.0 | 20.0 | 20.0 | 20.0 | 33.9 |
| **Linking Polymer (Parts by Wt.)** | 0.0 | 0.0 | 0.0 | 0.0 | 27.8 |
| **EVA Copolymer (Parts by Wt.)** | 60.0 | 60.0 | 60.0 | 60.0 | 0.0 |
| **Resin Component (Parts by Wt.)** | 100.0 | 100.0 | 100.0 | 100.0 | 81.0 |
| **Component Ratios** | | | | | |
| **I: Olefinic Copolymer (Parts by Wt.) to Aromatic/Aliphatic Block Copolymer (Parts by Wt.)** | 1.00 | 1.00 | 1.00 | 1.00 | 1.76 |
| **II: Linking Polymer (Parts by Wt.) to Aromatic/Aliphatic Block Copolymer (Parts by Wt.)** | 0.00 | 0.00 | 0.00 | 0.00 | 1.44 |
| **IV: Linking Polymer (Parts by Wt.) to Olefinic Copolymer (Parts by Wt.)** | 0.00 | 0.00 | 0.00 | 0.00 | 0.82 |
| NT: not tested<br>N/A : not applicable<br>* : Outside the scope of the present claims | | | | | |

**Table 4 (Continued). Compositions and Component Ratios for Foams**

| Composition | F* | G* | H* | I* | J* |
|---|---|---|---|---|---|
| **Aromatic/Aliphatic Block Copolymer (Parts by Wt.)** | 21.9 | 19.3 | 13.2 | 36.6 | 10.6 |
| **Olefinic Copolymer (Parts by Wt.)** | 17.9 | 33.9 | 19.9 | 29.9 | 35.9 |
| **Linking Polymer (Parts by Wt.)** | 35.7 | 27.8 | 39.7 | 19.9 | 31.8 |
| **EVA Copolymer (Parts by Wt.)** | 0.0 | 0.0 | 0.0 | 0.0 | 0.0 |
| **Resin Component (Parts by Wt.)** | 75.5 | 81.0 | 72.8 | 86.4 | 78.2 |
| **Component Ratios** | | | | | |
| **I: Olefinic Copolymer (Parts by Wt.) to Aromatic/Aliphatic Block Copolymer (Parts by Wt.)** | 0.82 | 1.76 | 1.50 | 0.82 | 3.39 |
| **II: Linking Polymer (Parts by Wt.) to Aromatic/Aliphatic Block Copolymer (Parts by Wt.)** | 1.63 | 1.44 | 3.00 | 0.54 | 3.00 |

(continued)

| Component Ratios | | | | | |
|---|---|---|---|---|---|
| IV: Linking Polymer (Parts by Wt.) to Olefinic Copolymer (Parts by Wt.) | 2.00 | 0.82 | 2.00 | 0.66 | 0.89 |
| NT: not tested<br>N/A : not applicable<br>* : Outside the scope of the present claims | | | | | |

**Table 4 (Continued). Compositions and Component Ratios for Foams**

| Composition | K* | L* | M* | N* | O* |
|---|---|---|---|---|---|
| Aromatic/Aliphatic Block Copolymer (Parts by Wt.) | 7.9 | 10.6 | 13.2 | 13.2 | 19.3 |
| Olefinic Copolymer (Parts by Wt.) | 51.9 | 35.9 | 19.9 | 19.9 | 13.9 |
| Linking Polymer (Parts by Wt.) | 23.8 | 31.8 | 39.7 | 39.7 | 27.8 |
| EVA Copolymer (Parts by Wt.) | 0.0 | 0.0 | 0.0 | 0.0 | 0.0 |
| Resin Component (Parts by Wt.) | 83.7 | 78.2 | 72.8 | 72.8 | 61.0 |
| Component Ratios | | | | | |
| I: Olefinic Copolymer (Parts by Wt.) to Aromatic/Aliphatic Block Copolymer (Parts by Wt.) | 6.54 | 3.39 | 1.50 | 1.50 | 0.72 |
| II: Linking Polymer (Parts by Wt.) to Aromatic/Aliphatic Block Copolymer (Parts by Wt.) | 3.00 | 3.00 | 3.00 | 3.00 | 1.44 |
| IV: Linking Polymer (Parts by Wt.) to Olefinic Copolymer (Parts by Wt.) | 0.46 | 0.89 | 2.00 | 2.00 | 2.00 |
| NT: not tested<br>N/A : not applicable<br>* : Outside the scope of the present claims | | | | | |

**Table 4 (Continued). Compositions and Component Ratios for Foams**

| Composition | P* | Q* | R* | S* | T* |
|---|---|---|---|---|---|
| Aromatic/Aliphatic Block Copolymer (Parts by Wt.) | 19.3 | 13.2 | 7.9 | 19.3 | 13.2 |
| Olefinic Copolymer (Parts by Wt.) | 33.9 | 19.9 | 51.9 | 33.9 | 19.9 |
| Linking Polymer (Parts by Wt.) | 27.8 | 39.7 | 23.8 | 27.8 | 39.7 |
| EVA Copolymer (Parts by Wt.) | 0.0 | 0.0 | 0.0 | 0.0 | 0.0 |
| Resin Component (Parts by Wt.) | 81.0 | 72.8 | 83.7 | 81.0 | 72.8 |
| Component Ratios | | | | | |
| I: Olefinic Copolymer (Parts by Wt.) to Aromatic/Aliphatic Block Copolymer (Parts by Wt.) | 1.76 | 1.50 | 6.54 | 1.76 | 1.50 |
| II: Linking Polymer (Parts by Wt.) to Aromatic/Aliphatic Block Copolymer (Parts by Wt.) | 1.44 | 3.00 | 3.00 | 1.44 | 3.00 |
| IV: Linking Polymer (Parts by Wt.) to Olefinic Copolymer (Parts by Wt.) | 0.82 | 2.00 | 0.46 | 0.82 | 2.00 |
| NT: not tested<br>N/A : not applicable<br>* : Outside the scope of the present claims | | | | | |

**Table 4 (Continued). Compositions and Component Ratios for Foams**

| Composition | U | V' | W' |
|---|---|---|---|
| **Aromatic/Aliphatic Block Copolymer (Parts by Wt.)** | 8.0 | 8.0 | 8.0 |
| **Olefinic Copolymer (Parts by Wt.)** | 12.0 | 12.0 | 12.0 |
| **Linking Polymer (Parts by Wt.)** | 23.9 | 23.9 | 23.9 |
| **EVA Copolymer (Parts by Wt.)** | 35.9 | 35.9 | 35.9 |
| **Resin Component (Parts by Wt.)** | 79.8 | 79.8 | 79.8 |
| **Component Ratios** | | | |
| **I: Olefinic Copolymer (Parts by Wt.) to Aromatic/Aliphatic Block Copolymer (Parts by Wt.)** | 1.50 | 1.50 | 1.50 |
| **II: Linking Polymer (Parts by Wt.) to Aromatic/Aliphatic Block Copolymer (Parts by Wt.)** | 3.00 | 3.00 | 3.00 |
| **IV: Linking Polymer (Parts by Wt.) to Olefinic Copolymer (Parts by Wt.)** | 2.00 | 2.00 | 2.00 |
| NT: not tested<br>N/A : not applicable | | | |

**Example 4: Testing of Foam Articles**

Examples of foam articles formed from the formulations described in Tables 3 and 4 were made and tested to determine their physical properties (e.g., specific gravity, hardness, split tear, compression set, and energy return). The results for foam articles for the various formulations are reported in Table 5.

The purpose of this experiment was to identify pre-foam compositions with improved split-tear values as compared to conventional ethylene vinyl acetate (EVA) foam, but which otherwise maintained the physical properties of conventional EVA foam which are beneficial for us as components of articles of footwear. The experimental pre-foam compositions were based on using a styrenic copolymer component, an unsaturated olefin component, and optionally an EVA component. Some of the formulations were used to produce foams which were first injection molded and then annealed and compression molded to produce a final foam component (IM + CM), while other formulations were used to produce foams which were injection molded to produce a final foam component (IM). The target range for the split-tear values was from about 2.5 kg/cm to about 3.0 kg/cm or greater. As a comparison, the split tear value for conventional EVA foam is about 1.7. The target ranges for the other physical properties of the final foam component were: a specific gravity of about 0.1 to about 0.2; an Asker C hardness of about 40 to about 50; a compression set of about 20% to about 35%; and a resilience of at least about 60%. These target ranges were based primarily on the physical properties of conventional EVA foam used as components for article of footwear, which has a specific gravity of from 0.080 to 0.095, an Asker C hardness of 34-38, a compression set of 75%, and an resiliency of about 59.

The test method used to obtain the specific gravity values reported in Table 5 is as follows.

The specific gravity of the foam was be determined by testing 3 representative samples taken from a foam preform or compression molded foam component. Using a balance with appropriate accuracy for the weight of the sample, the weight of each sample was determined both in air and when the sample was completely submerged in distilled water at a temperature of 22°C $\pm$ 2°C, after removing any air bubbles adhered to the surface of the foam sample before weighing. The specific gravity (S.G.) was then calculated by taking the weight of the sample in water and subtracting that from the weight of the sample in air, and this value was then divided into the weight of the sample in air, where all the weights are weights in grams.

Split Tear Test

The test method used to obtain the split tear values for foam articles as shown in Table 5 is as follows.

Four die-cut, rectangular-shaped samples of slab sheet or molded foam were prepared, each measuring 2.54 cm $\times$ 15.24 cm $\times$ 10 $\pm$ 1 mm (thickness). If the foam material to be tested had a skin, the material had its skin removed before preparing the four samples. A 3 cm long cut was made in the center from one end of the sample. Then five successive 2 cm portions were marked on the sample.

The crosshead speed of the tensile test apparatus was set at 50 mm/min. Each separated end of the sample was clamped in an upper grip and a lower grip of the test apparatus. The separation was placed in the middle between both grips. Each section of the sample was held in a clamp in such a manner that the original adjacent cut edges formed a straight line joining the centers of the clamps.

As needed, the cut was aided with a sharp knife to keep separating the foam material in the center of the sample. Readings caused by cutting with the knife were discarded. The lowest values for each of the five portions of each sample were recorded in kg/cm. Five values were recorded for each sample and an average of the five values was then obtained and reported. If a portion of a sample included a portion having an air bubble more than 2 mm in diameter, the value for the portion including the air bubble was not included in the average. If more than one portion of a sample was found to include air bubbles having a diameter greater than 2 mm, another sample was then tested.

Durometer Hardness Test

The test used to obtain the hardness values for the foam articles reported in Table 5 is as follows.

For flat foams, the sample was a minimum of 6 mm thick for Asker C durometer testing. If necessary, foam samples were stacked to make up the minimum thickness. Foam samples were large enough to allow all measurements to be performed at a minimum of 12 mm from the edge of the sample and at least 12 mm from any other measurement. Regions tested were flat and parallel with an area at least 6 mm in diameter. For the samples tested in Table 5, standard samples having dimensions of approximately 35 cm × 13 cm × 1.8 cm, were used, and a minimum of five hardness measurements were taken and tested using a 1 kg head weight.

Compression Set

The test used to obtain the compression set values for foam articles reported in Table 5 is as follows.

A foam sample was compressed between two metal plates to 50% of its original thickness and placed in an oven at 50°C for 6 hours. The sample was then cooled and the difference between its precompression and post-compression thickness was used as the measure of static compression set.

For the tests reported in Table 5, molded plaques having skin on one side and a thickness of 10 mm were used to obtain the samples. The plaque was then skived to a thickness of 10 +/-0.5 mm to remove the skin before cutting the samples. Compression molded foam materials having skin on two sides had the skin skived from one side, so that skin remained on only one side. Five 2.54 cm diameter circles were then machine drilled from the plaque to obtain the samples to be tested.

The compression set testing device consists of two flat steel plates set between the parallel faces of the compression device with compression rings and spacer bars for each set of parallel faces. Four compression rings of the same thickness (4.5 mm or 5.0 mm based on the specimen thickness) were used for each parallel face of the compression device. The percent compression set was calculated using the following equation:

$$\% \text{ Set} = ((\text{Original gauge - final gauge})/(50\% \text{ Original gauge})) \times 100$$

The center area of each specimen was marked and used to measure the specimens with the use of an AMES gage with no load on top.

Energy Return Test

The test used to obtain the energy return values for foam articles reported in Table 5 is as follows.

Energy return of the foam articles was determined using ASTM D 2632 92, which uses a vertical rebound apparatus.

**Table 5. Processing Methods and Properties of Foam Articles**

| Composition | A* | B* | C* | D* | E* |
|---|---|---|---|---|---|
| Processing Method | 2 | 2 | 2 | 2 | 2 |
| Physical Properties | | | | | |
| IM Foam | | | | | |
| Specific Gravity | 0.1185 | 0.1166 | 0.1171 | 0.1153 | 0.11 |

(continued)

| Composition | A* | B* | C* | D* | E* |
|---|---|---|---|---|---|
| Hardness (Asker C) | 32-33 | 33-34 | 32-33 | 28-30 | 41-42 |
| Split Tear (kg/cm) | 1.79-1.75 | 1.61-1.78 | 1.58-1.62 | 1.52-1.56 | 1.3 |
| Compression Set (%) | 72-73 | 70-71 | 72-74 | 70-71 | 51-53 |
| Energy Return (slab) (%) | | | | | NA |
| IM + CM Foam | | | | | |
| Specific Gravity | 0.2048 | 0.2089 | 0.2021 | 0.2042 | 0.16-0.17 |
| Hardness (Asker C) | 49-50 | 50-51 | 49-50 | 56-58 | 53-54 |
| Split Tear (kg/cm) | 2.7-2.8 | 2.6-2.8 | 2.8-2.9 | 2.4-2.5 | 2 |
| Compression Set (%) | 43-45 | 39-40 | 49-50 | 38-39 | 21 |
| Energy Return (slab) (%) | 50-51 | 49-50 | 53-54 | 47-48 | 68 |

NT: not tested
NA : not applicable
* : Outside the scope of the present claims
1: Pre-foam composition was injection molded to form final foam article
2: Pre-foam composition was injection molded to form foam preform, and then the foam preform was compression molded to form final foam article

**Table 5 (Continued). Processing Methods and Properties of Foam Articles**

| Composition | F* | G* | H* | I* | J* |
|---|---|---|---|---|---|
| Processing Method | 2 | 2 | 1 | 2 | 2 |
| Physical Properties | | | | | |
| IM Foam | | | | | |
| Specific Gravity | 0.09 | 0.1 | 0.15 | 0.11 | 0.159 |
| Hardness (Asker C) | 32-34 | 34-35 | 52-53 | 43-45 | 50-51 |
| Split Tear (kg/cm) | 1.9 | 2 | 2.5-2.6 | 1.6 | 2.98-3.06 |
| Compression Set (%) | 71-72 | 74-76 | 35-55 | 69 | 49-51 |
| Energy Return (slab) (%) | 60 | 83-89 | 71 | 64 | 64-65 |
| IM + CM Foam | | | | | |
| Specific Gravity | 0.13-0.14 | NT | NA | 0.18 | NT |
| Hardness (Asker C) | 43-48 | NT | NA | 55-59 | NT |
| Split Tear (kg/cm) | 2.3 | NT | NA | 2.5-2.6 | NT |
| Compression Set (%) | 39-41 | NT | NA | 21-22 | NT |
| Energy Return (slab) (%) | 68 | NT | NA | 69 | NT |

NT: not tested
NA : not applicable
* : Outside the scope of the present claims
1: Pre-foam composition was injection molded to form final foam article
2: Pre-foam composition was injection molded to form foam preform, and then the foam preform was compression molded to form final foam article

**Table 5 (Continued). Processing Methods and Properties of Foam Articles**

| Composition | K* | L* | M* | N* | O* |
|---|---|---|---|---|---|
| **Processing Method** | 2 | 1 | 2 | 1 | 2 |
| **Physical Properties** | | | | | |
| **IM Foam** | | | | | |
| **Specific Gravity** | 0.15 | 0.17 | 0.167 | 0.17 | 0.13 |
| **Hardness (Asker C)** | 46-48 | 54-55 | 52-54 | 54-55 | 42-44 |
| **Split Tear (kg/cm)** | 2.73-3.01 | 2.6-2.7 | 3.0-3.1 | 2.7-2.8 | 2 |
| **Compression Set (%)** | 59-61 | 26-32 | 43-46 | 28-33 | 71 |
| **Energy Return (slab) (%)** | 67-72 | 69-70 | 61-63 | 69-72 | 65 |
| **IM + CM Foam** | | | | | |
| **Specific Gravity** | NT | NA | NT | NA | 0.17-0.18 |
| **Hardness (Asker C)** | NT | NA | NT | NA | 54-57 |
| **Split Tear (kg/cm)** | NT | NA | NT | NA | 3.0-3.1 |
| **Compression Set (%)** | NT | NA | NT | NA | 28 |
| **Energy Return (slab) (%)** | NT | NA | NT | NA | 69 |
| NT: not tested<br>NA : not applicable<br>* : Outside the scope of the present claims<br>1: Pre-foam composition was injection molded to form final foam article<br>2: Pre-foam composition was injection molded to form foam preform, and then the foam preform was compression molded to form final foam article | | | | | |

**Table 5 (Continued). Processing Methods and Properties of Foam Articles**

| Composition | P* | Q* | R* | S* | T* |
|---|---|---|---|---|---|
| **Processing Method** | 2 | 1 | 1 | 1 | 1 |
| **Physical Properties** | | | | | |
| **IM Foam** | | | | | |
| **Specific Gravity** | 0.11 | 0.17 | 0.16 | 0.15 | 0.11 |
| **Hardness (Asker C)** | 42-43 | 54-55 | 51-52 | 49-51 | 33-36 |
| **Split Tear (kg/cm)** | 2 | 3.4 | 2.6 | 2.8-3.0 | 1.4-1.7 |
| **Compression Set (%)** | 66-72 | 38-39 | 37-43 | 40-50 | 63-70 |
| **Energy Return (slab) (%)** | NA | 68 | 71-73 | 74-76 | 84-87 |
| **IM + CM Foam** | | | | | |
| **Specific Gravity** | 0.17 | NA | NA | NA | NA |
| **Hardness (Asker C)** | 52-55 | NA | NA | NA | NA |
| **Split Tear (kg/cm)** | 3.1 | NA | NA | NA | NA |
| **Compression Set (%)** | 31-37 | NA | NA | NA | NA |

(continued)

| Composition | P* | Q* | R* | S* | T* |
|---|---|---|---|---|---|
| Energy Return (slab) (%) | 67-70 | NA | NA | NA | NA |

NT: not tested
NA : not applicable
* : Outside the scope of the present claims
1: Pre-foam composition was injection molded to form final foam article
2: Pre-foam composition was injection molded to form foam preform, and then the foam preform was compression molded to form final foam article

**Table 5 (Continued). Processing Methods and Properties of Foam Articles**

| Composition | U | V' | W' |
|---|---|---|---|
| Processing Method | 1 | 1 | 1 |
| Physical Properties | | | |
| IM Foam | | | |
| Specific Gravity | 0.18 | 0.19 | 0.19 |
| Hardness (Asker C) | 42-45 | 42-44 | 43-45 |
| Split Tear (kg/cm) | 2.5-2.6 | 2.6-2.7 | 2.6 |
| Compression Set (%) | 29-33 | 32-34 | 31-32 |
| Energy Return (slab) (%) | 78-80 | 80 | 79-82 |
| IM + CM Foam | | | |
| Specific Gravity | NA | NA | NA |
| Hardness (Asker C) | NA | NA | NA |
| Split Tear (kg/cm) | NA | NA | NA |
| Compression Set (%) | NA | NA | NA |
| Energy Return (slab) (%) | NA | NA | NA |

NT: not tested
NA : not applicable
1: Pre-foam composition was injection molded to form final foam article
2: Pre-foam composition was injection molded to form foam preform, and then the foam preform was compression molded to form final foam article

Results

Four of the 13 final molded foam articles produced using injection molding and compression molding (IM + CM) had split tear values of greater than 2.5, and 8 of the 11 final molded foam articles produced using just the injection molding process (IM) had split tear values of greater than 2.5. Unexpectedly, 12 of the formulations which produced molded foam articles with the target split tear values also had resiliency values significantly higher than expected. Specifically, formulations H, I, L, N, O, P, Q, R, S, U, V' and W' had resiliency values ranging from 67% to 82%.

In general, the pre-foam compositions which produced final foam components with unexpectedly high resiliency values included from about 10 parts per hundred of resin (phr) to about 22 phr of the styrenic copolymer component, and from about 45 phr to about 80 phr of the unsaturated olefin component. Some of these pre-form compositions also comprised from about 31 phr to about 36 phr of the EVA component, while others were free of the EVA component. Generally, the pre-foam compositions which produced final foam components with target split tear values and unexpectedly high resiliency values had ratios of the phr of the styrenic copolymer component to the phr of the unsaturated olefin component which ranged from about 0.17 to about 0.30. The pre-foam composition of claim 1 has a ratio of phr of styrenic copolymer component to phr of unsaturated olefin component that ranges from 0.17 to 0.30. For the pre-foam compositions including an EVA component, the ratios of the phr of the styrenic copolymer component to the phr of the EVA component ranged from about 0.37 to about 0.70. The ratios of the phr of the unsaturated olefin component to the phr of the EVA component ranged from about 2.2 to about 2.3. For the pre-foam compositions including an EVA component, the sum of all three ratios ranged from about 2.7 to about 3.3.

**Claims**

1. A pre-foam composition comprising:

   (i) 5 parts by weight to 20 parts by weight of A-B-A block copolymer based upon an entire weight of the composition, wherein each of the A blocks comprise styrenic repeat units, the B block is a random copolymer of ethylene and a first alpha-olefin, wherein the first alpha-olefin has 3 to 8 carbon atoms, and wherein the A-B-A block copolymer comprises 10% to 40% of the A blocks by weight based upon an entire weight of the A-B-A block copolymer;
   (ii) 5 parts by weight to 20 parts by weight of olefinic block copolymer based upon an entire weight of the composition, wherein the olefinic block copolymer is a copolymer of ethylene and a second alpha-olefin, wherein the second alpha-olefin has 6 to 12 carbon atoms, and wherein the olefinic block copolymer has one or more blocks rich in the ethylene and one or more blocks rich in the second alpha-olefin; and
   (iii) 15 parts by weight to 35 parts by weight of alpha-olefin linking polymer based upon an entire weight of the composition, wherein the alpha-olefin linking polymer is a copolymer of ethylene and a third alpha-olefin, wherein the third alpha-olefin has 3 to 18 carbon atoms, and wherein the alpha-olefin linking polymer has an alpha-olefin monomer content of 15% to 40% by weight based upon an entire weight of the alpha-olefin linking polymer,

   wherein the ratio of the parts per hundred resin (phr) of (a) styrenic copolymer component to phr of (b) unsaturated olefin component ranges from 0.17 to 0.30.

2. The composition according to claim 1, wherein the composition comprises: 10 to 22 phr of (a) styrenic copolymer component comprising styrene repeating units and non-styrenic repeating units; and 45 to 80 phr of (b) unsaturated olefin component, wherein the unsaturated olefin is an unsaturated olefin polymer or copolymer.

3. The composition according to claim 1, comprising from 35 to 85 phr of (b) unsaturated olefin component, wherein the unsaturated olefin is an unsaturated olefin polymer or copolymer.

4. The composition according to any preceding claim, wherein each of the A blocks consists essentially of polystyrene.

5. The composition according to any preceding claim, wherein the B block consists essentially of a copolymer of ethylene and octene.

6. The composition according to any one of claims 1 to 4, wherein the B block consists essentially of a copolymer of ethylene and butadiene.

7. The composition according to any preceding claim, wherein the A-B-A block copolymer is at least partially or fully hydrogenated.

8. The composition according to any one of claims 1 to 6, wherein the A-B-A block copolymer has a degree of hydrogenation of 50 % to 80 %.

9. The composition according to any preceding claim, further comprising one or both of a free-radical initiator and a chemical blowing agent.

10. The composition according to any preceding claim, further comprising 20% to 60% by weight of an ethylene-vinyl acetate copolymer having a vinyl acetate content of 10% to 45% by weight based upon the weight of the ethylene-vinyl acetate copolymer.

11. A composition comprising a crosslinked reaction product of a composition according to any preceding claim, wherein the composition is a foamed composition, optionally wherein the foam composition has a density of from 0.08 $g/cm^3$ to 0.15 $g/cm^3$.

12. The composition according to claim 11, wherein the foam composition has an energy return of from 60% to 85%, determined using ASTM D 2632 92.

13. A compression molded foam, formed by compression molding the foam composition according to claim 11 or claim 12.

14. A sole component (14) for an article of footwear (10), the sole component comprising the foam composition according to claim 11 or claim 12, or the compression molded foam according to claim 13.

15. An article of footwear (10) comprising the sole component (14) according to claim 14.


**Patentansprüche**

1. Vorschaumstoffzusammensetzung mit:

    (i) 5 Teilen nach Gewicht bis 20 Teilen nach Gewicht an A-B-A-Blockcopolymer basierend auf einem Gesamtgewicht der Zusammensetzung, bei der jeder der A-Blöcke Styrolwiederholungseinheiten aufweist, der B-Block ein statistisches Copolymer von Ethylen und einem ersten Alphaolefin ist, bei der das erste Alphaolefin 3 bis 8 Kohlenstoffatome aufweist, und bei der das A-B-A-Blockcopolymer 10% bis 40% der A-Blöcke nach Gewicht basierend auf einem Gesamtgewicht des A-B-A-Blockcopolymers aufweist,
    (ii) 5 Teilen nach Gewicht bis 20 Teilen nach Gewicht an olefinischem Blockcopolymer basierend auf einem Gesamtgewicht der Zusammensetzung, bei der das olefinische Blockcopolymer ein Copolymer von Ethylen und einem zweiten Alphaolefin ist, bei der das zweite Alphaolefin 6 bis 12 Kohlenstoffatome aufweist, und bei der das olefinische Blockcopolymer einen oder mehr Blöcke reich an dem Ethylen und einen oder mehr Blöcke reich an dem zweiten Alphaolefin aufweist, und
    (iii) 15 Teilen nach Gewicht bis 35 Teilen nach Gewicht an Alphaolefinverbindungspolymer basierend auf einem Gesamtgewicht der Zusammensetzung, bei der das Alphaolefinverbindungspolymer ein Copolymer von Ethylen und einem dritten Alphaolefin ist, bei der das dritte Alphaolefin 3 bis 18 Kohlenstoffatome aufweist, und bei der das Alphaolefinverbindungspolymer einen Alphaolefinmonomergehalt von 15% bis 40% nach Gewicht basierend auf einem Gesamtgewicht des Alphaolefinverbindungspolymers aufweist,

    bei der das Verhältnis der Teile pro hundert Harz (phr) an (a) Styrolcopolymerkomponente zu phr an (b) ungesättigter Olefinkomponente von 0,17 bis 0,30 reicht.

2. Zusammensetzung nach Anspruch 1, bei der die Zusammensetzung: 10 bis 22 phr an (a) Styrolcopolymerkomponente mit Styrolwiederholungseinheiten und Nichtstyrolwiederholungseinheiten; und 45 bis 80 phr an (b) ungesättigter Olefinkomponente aufweist,
   bei der das ungesättigte Olefin ein ungesättigtes Olefinpolymer oder -copolymer ist.

3. Zusammensetzung nach Anspruch 1, mit von 35 bis 85 phr an (b) ungesättigter Olefinkomponente, bei der das ungesättigte Olefin ein ungesättigtes Olefinpolymer oder -copolymer ist.

4. Zusammensetzung nach einem vorhergehenden Anspruch, bei der jeder der A-Blöcke im Wesentlichen aus Polystyrol besteht.

5. Zusammensetzung nach einem vorhergehenden Anspruch, bei der der B-Block im Wesentlichen aus einem Copolymer von Ethylen und Octen besteht.

6. Zusammensetzung nach einem der Ansprüche 1 bis 4, bei der der B-Block im Wesentlichen aus einem Copolymer von Ethylen und Butadien besteht.

7. Zusammensetzung nach einem vorhergehenden Anspruch, bei der das A-B-A-Blockcopolymer zumindest teilweise oder vollständig hydriert ist.

8. Zusammensetzung nach einem der Ansprüche 1 bis 6, bei der das A-B-A-Blockcopolymer einen Hydrierungsgrad von 50% bis 80% aufweist.

9. Zusammensetzung nach einem vorhergehenden Anspruch, ferner mit einem oder beiden eines Radikalinitiators und eines chemischen Treibmittels.

10. Zusammensetzung nach einem vorhergehenden Anspruch, ferner mit 20% bis 60% nach Gewicht eines Ethylenvinylacetatcopolymers mit einem Vinylacetatgehalt von 10% bis 45% nach Gewicht basierend auf dem Gewicht des Ethylenvinylacetatcopolymers.

11. Zusammensetzung mit einem vernetzten Reaktionsprodukt einer Zusammensetzung nach einem vorhergehenden Anspruch, bei der die Zusammensetzung eine geschäumte Zusammensetzung ist, bei der optional die Schaumstoffzusammensetzung eine Dichte von 0,08 g/cm$^3$ bis 0,15 g/cm$^3$ aufweist.

12. Zusammensetzung nach Anspruch 11, bei der die Schaumstoffzusammensetzung eine Energierückgewinnung von 60% bis 85%, unter Verwendung von ASTM D 2632 92 bestimmt, aufweist.

13. Formgepresster Schaumstoff, der durch Formpressen der Schaumstoffzusammensetzung nach Anspruch 11 oder Anspruch 12 ausgebildet ist.

14. Sohlenkomponente (14) für einen Fußbekleidungsartikel (10), die die Schaumstoffzusammensetzung nach Anspruch 11 oder Anspruch 12 oder den formgepressten Schaumstoff nach Anspruch 13 aufweist.

15. Fußbekleidungsartikel (10) mit der Sohlenkomponente (14) nach Anspruch 14.


**Revendications**

1. Composition de pré-mousse, comprenant :

   **(i)** de 5 parties en poids à 20 parties en poids de copolymère à blocs A-B-A sur la base d'un poids total de la composition, dans laquelle chacun des blocs A comprend des unités de répétition styréniques, le bloc B est un copolymère aléatoire d'éthylène et d'une première alpha-oléfine, dans laquelle la première alpha-oléfine présente de 3 à 8 atomes de carbone, et dans laquelle le copolymère à blocs A-B-A comprend de 10 % à 40 % des blocs A en poids sur la base d'un poids total du copolymère séquencé A-B-A ;
   **(ii)** de 5 parties en poids à 20 parties en poids de copolymère séquencé oléfinique sur la base d'un poids total de la composition, dans laquelle le copolymère à blocs oléfinique est un copolymère d'éthylène et d'une deuxième alpha-oléfine, dans laquelle la deuxième alpha-oléfine présente de 6 à 12 atomes de carbone, et dans laquelle le copolymère à blocs oléfinique présente une ou plusieurs séquences riches en l'éthylène et une ou plusieurs séquences riches en la deuxième alpha-oléfine ; et
   **(iii)** de 15 parties en poids à 35 parties en poids de polymère de liaison d'alpha-oléfine sur la base d'un poids total de la composition, dans laquelle le polymère de liaison d'alpha-oléfine est un copolymère d'éthylène et d'une troisième alpha-oléfine, dans laquelle la troisième alpha-oléfine présente de 3 à 18 atomes de carbone, et dans laquelle le polymère de liaison d'alpha-oléfine présente une teneur en monomère d'alpha-oléfine de 15 % à 40 % en poids sur la base d'un poids total du polymère de liaison d'alpha-oléfine, dans laquelle le rapport des parties par centaine de résine (pcr) de (a) un composant copolymère styrénique aux pcr de (b) un composant d'oléfine insaturée est compris entre 0,17 et 0,30.

2. Composition selon la revendication 1, dans laquelle la composition comprend : de 10 à 22 pcr de (a) un composant copolymère styrénique comprenant des unités de répétition styréniques et des unités de répétition non styréniques ; et de 45 à 80 pcr de (b) un composant d'oléfine insaturée, dans laquelle l'oléfine insaturée est un polymère ou copolymère d'oléfine insaturée.

3. Composition selon la revendication 1, comprenant de 35 à 85 pcr de (b) un composant d'oléfine insaturée, dans laquelle l'oléfine insaturée est un polymère ou copolymère d'oléfine insaturée.

4. Composition selon l'une quelconque des revendications précédentes, dans laquelle chacun des blocs A est constitué essentiellement de polystyrène.

5. Composition selon l'une quelconque des revendications précédentes, dans laquelle la bloc B est essentiellement constitué d'un copolymère d'éthylène et d'octène.

**6.** Composition selon l'une quelconque des revendications 1 à 4, dans laquelle le bloc B est essentiellement constitué d'un copolymère d'éthylène et de butadiène.

**7.** Composition selon l'une quelconque des revendications précédentes, dans laquelle le copolymère à blocs A-B-A est au moins partiellement ou totalement hydrogéné.

**8.** Composition selon l'une quelconque des revendications 1 à 6, dans laquelle le copolymère à blocs A-B-A présente un degré d'hydrogénation de 50 % à 80 %.

**9.** Composition selon l'une quelconque des revendications précédentes, comprenant en outre un initiateur de radicaux libres et/ou un agent gonflant chimique.

**10.** Composition selon l'une quelconque des revendications précédentes, comprenant en outre de 20 % à 60 % en poids d'un copolymère d'éthylène-acétate de vinyle présentant une teneur en acétate de vinyle de 10 % à 45 % en poids par rapport au poids du copolymère d'éthylène-acétate de vinyle.

**11.** Composition comprenant un produit de réaction réticulé d'une composition selon l'une quelconque des revendications précédentes, dans laquelle la composition est une composition moussante, facultativement dans laquelle la composition moussante présente une densité de 0,08 g/cm$^3$ à 0,15 g/cm$^3$.

**12.** Composition selon la revendication 11, dans laquelle la composition de mousse présente un retour d'énergie de 60 % à 85 %, déterminé en utilisant ASTM D 2632 92.

**13.** Mousse moulée par compression, formée par moulage par compression de la composition de mousse selon la revendication 11 ou la revendication 12.

**14.** Composant de semelle (14) pour un article chaussant (10), le composant de semelle comprenant la composition de mousse selon la revendication 11 ou la revendication 12, ou la mousse moulée par compression selon la revendication 13.

**15.** Article chaussant (10) comprenant le composant de semelle (14) selon la revendication 14.

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 45856417
- US 45858117
- US 62308694 A
- US 62329625
- US 62429912

- US 2006154998 A1
- JP 5719980 B
- CN 104927182 A
- US 6303723 B